# EUROPÄISCHE PATENTSCHRIFT

(11) **EP 0 728 125 B1**
(45) Veröffentlichungstag und Bekanntmachung des Hinweises auf die Patenterteilung: **24.02.1999**
(21) Anmeldenummer: 94900133.3
(22) Anmeldetag: 11.11.1993
(51) Int. Cl.: C05F 17/02, C05F 17/00

(54) **VERFAHREN UND VORRICHTUNG ZUR BIOLOGISCHEN BEHANDLUNG VON STOFFEN UND/ODER STOFFGEMENGEN IN GESCHLOSSENEN ROTTEREAKTOREN**
PROCESS AND DEVICE FOR BIOLOGICAL TREATMENT OF SUBSTANCES AND/OR SUBSTANCE MIXTURES IN CLOSED ROTTING REACTORS
PROCEDE ET DISPOSITIF DE TRAITEMENT BIOLOGIQUE DE SUBSTANCES ET/OU DE MELANGES DE SUBSTANCES DANS DES REACTEURS DE PUTREFACTION FERMES

(43) Veröffentlichungstag der Anmeldung: 28.08.1996
(73) Patentinhaber: Grabbe, Klaus, Dr., D-38116 Braunschweig (DE)
(72) Erfinder: GRABBE, Klaus, D-38116 Braunschweig (DE); SCHAAR, Lothar, D-31700 Heuer en (DE); DEUTSCH, Andreas, D-38259 Salzgitter (DE)
(74) Vertreter: von Samson-Himmelstjerna, Friedrich R., Dipl.-Phys.
(86) Internationale Anmeldenummer: EP9303167
(87) Internationale Veröffentlichungsnummer: WO9513254

(56) Entgegenhaltungen:
- EP-A- 0 107 925
- EP-A- 0 296 645
- WO-A-93/23350
- WO-A-93/23351
- DE-C- 4 022 328

## Beschreibung

### Technisches Gebiet

Die Erfindung bezieht sich auf ein Verfahren und eine Vorrichtung zur biologischen Behandlung, insbesondere Kompostierung, biogener und abiogener Stoffe und/oder Stoffgemenge in einer Miete in Gegenwart biologisch aktiver Komponenten, insbesondere Mikroorganismen, in einem geschlossenen Reaktor mit mehreren Reaktorzonen.

### Zugrundeliegender Stand der Technik

Derartige Verfahren und Anlagen sind z.B. als industrielle Kompostierverfahren und Kompostieranlagen in den vielfältigsten Ausführungsformen bekannt. Bei der Rotte, d.h. Kompostierung biogener organischer und abiogener Stoffe unter aeroben Bedingungen entstehen Wärme und Stoffwechselgase, die über Belüftungssysteme abgeführt werden müssen. Üblicherweise werden Rottegemenge von Frischluft durchströmt und die korrespondierende Abluft wird ausgeblasen. Mit der Frischluftzufuhr wird unkontrolliert Sauerstoff zugeführt und mit der Abluft werden Feuchtigkeit und Wärme ausgetragen. Es bilden sich Gas-, Feuchtigkeits- und/oder Temperatur-Gradienten aus, auf die nicht Einfluß genommen werden kann und die aufgrund der vernetzten Betriebs- bzw. Prozess-Parameter nur zur Beschreibung des Prozesses taugen.

So lassen sich mit diesen konventionellen Belüftungssystemen wichtige Verfahrensziele nicht erreichen. Ist ein Wasseraustrag erwünscht, wird damit gleichzeitig auch Wärme unkontrolliert abgeführt. Somit können einerseits die erwünschten Feuchtegehalte nicht eingehalten und andererseits wichtige Temperaturvorgaben für die Entwicklung mesophiler und thermophiler Mikrofloren nicht unabhängig angesteuert werden. Auch muß darauf verzichtet werden, über einen definierten Sauerstoffeintrag Einfluß auf den mikrobiellen Stoffumsatz zu nehmen. Die Mängel der derzeitigen Prozeßführungen zeigen sich in der Problematik, reproduzierbare und gezielte Milieuverhältnise einzustellen, z.B. an der Ausbildung zu hoher Temperaturplateaus in bestimmten Behandlungsphasen an einer unerwünschten Trockenstabilisierung des Rottegutes und an einem unbefriedigenden Stoffumsatz. Hinzu kommen ein Austrag von Geruchsstoffen und ein Kondensatanfall, die zusätzliche Behandlungseinrichtungen erforderlich machen. Da die Schlüsselparameter der biologischen Prozessführung, die Sauerstoffversorgung, die Temperatur und die Feuchte nur ungenügend eingehalten werden können, führt selbst der Anschluß separater Reaktoren an eine zentrale Luftaufbereitung zu keiner Verbesserung der Rotte, zumal die Inhalte der Reaktoren unterschiedliche Rottegrade aufweisen und mit identischer Luftqualität und Luftmenge versorgt werden.

Ein Grundanliegen bei der Weiterentwicklung des Kompostierungsprozesses besteht somit darin, die unbefriedigende und falsche Nutzung der Leistungspotentiale spezieller Mikrofloren zu verbessern, die zwangsläufig sich ergebende schlechte Reproduzierbarkeit angestrebter Qualitäten im Sinne der Güterichtlinien für Komposte aufzuheben und/oder bedenkliche Nischenbildungen für Schadfloren in Komposten und seinen Folgeprodukten auszuschließen und die Wirtschaftlichkeit des Rotteprozesses durch optimale Prozeßführung zu verbessern. Die Risiken möglicher Schadwirkungen bei der diversifizierten Verwendung von Komposten sind sonst nicht kalkulierbar und vor dem Hintergrund der Produkthaftpflicht unzumutbar.

Aus der DE-40 21 868 A1 - **HERHOF -** ist ein Verfahren zur Kompostierung von Abfällen bekannt. Dabei wird das Rottegut in einen geschlossenen Behälter eingebracht und unter Luftzuführung mikrobiell abgebaut. Um die Kompostierung schnell und zuverlässig in Gang zu bringen, wird während der Anfahrphase die aus dem Rottegut austretende Abluft dem Rottegut erneut zugeführt. Diese Umluftphase wird aufgegeben, sobald der Sauerstoffanteil 18 % unterschreitet. Das in dieser Druckschrift beschriebene Umluftsystem dient der Konservierung der biogen gebildeten Wärme, vor allem im Winter.

Die DE-40 21 865 A1 - **HERHOF -** beschreibt ebenfalls ein Verfahren und eine Vorrichtung zur Kompostierung von Abfällen mit Umluftführung. Die Umluftführung dient dabei der Hygienisierung über eine Zeit von 5 Tagen. Sie wird erst nach dem Abbau der leichter abbaubaren Bestandteile gestartet, weil sich die biogene Wärmebildung in der stürmischen Anfangsphase der Stoffbehandlung dann nicht mit dem dargestellten System beherrschen läßt, wenn es zur Regelung des Gashaushaltes benutzt wird. Zur Kühlung bleibt nur die Frischluftzufuhr als Teil einer undefinierten Parameterverknüpfung.

Schließlich beschreibt die DE-40 08 104 A1 - **WIENECKE** - ein Kompostierungssystem, das sich nur für Kleinbehälter eignet, da zur Lüftung lediglich die Konvektion eingesetzt wird. Eine Ansteuerung des mikrobiellen Stoffumsatzes ist nicht möglich.

Bei diesen in der Praxis bereits realisierten Kompostierungsanlagen (DE 40 21 868 A1; DE 40 21 865 A1; DE 40 08 104 A1) werden Umluftführungen beschrieben, die konzeptionell aus einer Verfahrenstechnik abgeleitet sind, die nur mit Frischluft arbeitet und welche die Möglichkeiten, die Klimavorgaben bieten, (aus Unkenntnis) nicht nutzt. So wird vorzugsweise auf die optimale Sauerstoffversorgung (21%) in der Gasphase Wert gelegt, die mit verhältnismäßig geringem Luftdurchsatz pro Volumenmasse und Zeit erreicht werden kann. Häufig wird auf die Kohlendioxidkonzentration als Regelparameter zurückgegriffen, was bei Rottegemengen, deren pH-Wert über 7 liegt, unsinnig ist. Das Bestreben, möglichst hohe Temperaturplateaus zu erreichen, läßt den Wunsch, die Temperatur in der Rottemasse auf die biologisch notwendigen Bedingungen für gewünschte Stoffumsetzungen als conditio sine qua non einzuregeln, nicht aufkommen. Dort allerdings, wo dieser Weg beschritten wird, zeigt sich, daß die Luftdurchsatzraten viel zu niedrig angesetzt sind, um homogene Milieubedingungen im Substrat zu schaffen.

Die eingangs genannte Kompostierungsanlage ist aus der DE-40 34 400 Al bzw. der korrespondierenden WO 92/07807 - **GRABBE** - bekannt. Auf dieses Dokument wird hiermit - zur Vermeidung von Wiederholungen - ausdrücklich Bezug genommen. Es beschreibt ein Verfahren zur biotechnologischen Behandlung eines Reststoffgemenges, vorzugsweise in Form einer Miete, durch einen mikrobiellen Umsetzungsprozeß in einem geschlossenen System, das insbesondere zur Herstellung von Kompost geeignet ist. Hierbei werden physikalische, chemische und biologische Verfahrensparameter in die Verfahrensführung einbezogen und miteinander im Sinne einer Optimierung der Hygienisierung, Geruchstilgung und Dauerhumusbildung des Reststoffgemenges auf den jeweils dazu erforderlichen mikrobiellen Stoffumsatz zugeschnitten. Hierzu wird das Reststoffgemenge zwei unterschiedlichen Belüftungsarten oder einer Mischform zwischen diesen beiden Belüftungsarten unterworfen. Nach der einen Belüftungsart wird Luft durch das Reststoffgemenge hindurchgeführt. Nach der zweiten Belüftungsart hingegen die Luft oberhalb des Reststoffgemenges entlanggeführt. Die beiden Belüftungsarten werden zum Aufbau gewünschter Temperatur-, Feuchtigkeits- und/oder Sauerstoff-Kohlendioxidverhältnisse, insbesondere Profile, im Reststoffgemenge so aneinander angepaßt, daß variable Mischungsverhältnisse zwischen 0 bis 100 % aus dem Umluftvolumenstrom gebildet werden können. Die Mittel zur Belüftung sind jeweils Lüfter bzw. Ventilatoren, wobei der eine Lüfter die Luft oberhalb des Reststoffgemenges entlangführt und ein zweiter Lüfter die Luft durch das Reststoffgemenge hindurchbläst.

Das in den letztgenannten Druckschriften (DE 40 34 400 A1, WO 92 07807) beschriebene Verfahren arbeitet in der Regel mit Erfolg. Probleme können jedoch dann auftreten, wenn die Dichte des Rottegemenges eine Durchströmung behindert. Im Grenzfall einer Luftundurchlässigkeit des Rottegemenges baut der für die Durchströmung vorgesehene Ventilator lediglich einen statischen Druck unter der Miete auf, ohne daß Luft zum Strömen gebracht werden kann, selbst dann nicht, wenn beide Ventilatoren laufen, d.h. der für die Überströmung der Miete vorgesehene Ventilator den für die Durchströmung der Miete vorgesehene Ventilator insoweit unterstützt, als die über die Miete entlangstreichende Luft eine gewisse Sogwirkung auf die Miete ausübt. Obwohl beide Ventilatoren laufen, bewirkt nur das Überströmen der Miete eine gewisse Luftzirkulation im System.

Weitere, noch nicht offengelegte, Schutzrechtsanmeldungen des Anmelders (deutsche Patentanmeldungen mit den Aktenzeichen P 42 15 269.0-41 und P 42 15 267.4 sowie PCT-Anmeldungen mit den Aktenzeichen PCT/EP93/01142 und PCT/EP93/01143) beschreiben variable Umluftführungssysteme in geschlossenen Rotteeinrichtungen für die Kompostherstellung, welche die offenkundigen Nachteile der konventionellen Systeme beseitigen. Sie besitzen zusätzlich den Vorteil, daß die relevanten Prozeßparameter unabhängig voneinander angesteuert und in geeigneter Weise zur Optimierung der Prozeßführung kombiniert werden können. Im Gegensatz hierzu haben sich diese Parameter in den konventionellen Systemen gegenläufig beeinflusst und den biologischen Prozeß behindert. Der Offenbarungsinhalt obiger Schutzrechtsanmeldungen wird hiermit ausdrücklich auch zum Beschreibungsinhalt der vorliegenden Anmeldung erklärt.

### Offenbarung der Erfindung

Die vorliegende Erfindung zielt nun darauf ab, eine Verfahren und eine Vorrichtung der eingangs genannten Gattung zur Verfügung zu stellen, welche(s) eine biologisch feinfühlige Regulierung angestrebter Betriebsweisen, insbesondere zur Erzeugung reproduzierbarer Produkte auf wirtschaftlichem Wege, ermöglicht.

Das erfindungsgemäße Ziel wird durch die Gegenstände der Patentansprüche 1 und 18 erreicht, also durch: ein Verfahren und eine Vorrichtung zur Behandlung von Stoffen oder Stoffgemengen in einer Miete unter Einsatz biologisch aktiver Komponenten, insbesondere Mikroorganismen, in einem geschlossenen Reaktor mit mehreren Reaktorzonen, nämlich der Miete selbst und an die Miete angrenzende Reaktorgasräume. Dabei werden verfahrensmäßig zum Einstellen, Einhalten, Steuern oder regeln der Milieuzustände, Milieuzustandsänderungen und/oder Prozeßparameter in der Miete Gasströmungs- Reguliermittel eingesetzt. Die Vorrichtung weist hierzu einen geschlossenen Reaktor mit den obengenannten Reaktorzonen auf; ferner Mittel zum Einstellen, Einhalten, Steuern und Regeln (im folgenden gemeinsam Reguliermittel genannt,) der Milieuzustände, Milieuzustandsänderungen und/oder Prozeßparameter in der Miete.

Die Reguliermittel sind derart ausgelegt, daß mit ihnen wenigstens ein oder mehrere Gasströme aus folgenden Gasströmungsarten ausgewählt werden können: Durchströmen, Überströmen, Unterströmen und Umströmen der Miete. Auch hierdurch kann der Entwicklung extremer Zustände während des Kompostierungsprozesses rechtzeitig und wirksam entgegengewirkt werden. Ein sogenanntes "Festfahren" der Miete wird hierdurch in der Praxis verhindert.

Nachfolgend werden in den Unteransprüchen weitere bevorzugte Ausführungsformen der vorhegenden Erfindung offenbart:

Durch diese Maßnahmen lassen sich gewünschte und notwendige Milieuzustände über eine Feinabstimmung der Klimaübertragung aus dem Gasraum auf das Feststoffgemenge einhalten und somit der allgemeine mikrobielle Stoffumsatz beeinflussen; ferner lassen sich die Leistungen und synergistische Effekte speziell geförderter Populationen optimieren. Diese Maßnahmen erlauben auch eine optimale Anpassung der Prozessführung an unterschiedliche Ausgangspunkte und Rotteschichtdicken.

Bevorzugt sind wenigstens zwei Reaktorzonen, insbesondere die Miete selbst und eine an sie angrenzende Reaktorzone, über Gas-, miteinander gekoppelt. Nach den Ansprüchen 2 bzw. 19 handelt es sich in einer besonders bevorzugten Ausführungsform bei den Gasströmen von Luftströme. Nach Anspruch 19 sind die Gasströmungs-Reguliermittel zum Einstellen, Einhalten, Steuern oder Regeln von Luftströmen ausgelegt. Hierdurch werden u.a. folgende Vorteile erreicht: wirkt das Gemenge im Falle großer Dichte als Strömungsblockade, ist also eine Durchströmung blokkiert, läßt sich durch strömungsmäßige Verkopplung der oberhalb und unterhalb der Miete befindlichen Reaktorzonen gleichwohl noch eine Vielfalt von Strömungsvarianten realisieren, mit denen der Milieuzustand in der Miete beeinflußt werden kann. So können zumindest die Grenzschichten der Miete zu den Gasräumen klimakonditioniert werden; ggf. kann hierdurch schließlich auch die Blockade wieder aufgehoben werden.

Nach den Ansprüchen 3 und 20 wird der Reaktorbetrieb durch entsprechende Auslegung der Reguliermittel über einen oder mehrere stationär, quasi-stationär und/oder instationär geführte Gasströme reguliert. Hierdurch lassen sich extreme Milieuzustände an den Grenzflächen der Miete, z.B. Austrocknungen, vermeiden; ferner Temperaturschwankungen oder Änderungen im Gashaushalt relativieren.

Nach den Patentansprüchen 4 und 21 werden insbesondere die Volumen-, Druck-, Temperatur- und/oder Geschwindigkeits-verhältnisse der Gasströmungsarten stufenlos reguliert. Mittels der Gasströmungs-Reguliermittel werden wenigstens zwei unterschiedliche Gasströmungsarten miteinander kombiniert. Die Volumina, Drücke und/oder Geschwindigkeiten der Gasströmungsarten können hierbei - ebenfalls stufenlos - zwischen 0 und 100 % eingestellt werden. Insbesondere durch die stufenlose Veränderung und der Kombination unterschiedlicher Gasströmungsarten läßt sich die Ausbildung von gewünschten Gradienten der Milieuparameter, z.B. O₂, CO₂, Feuchte, Temperatur gezielt und sensibel beeinflussen. So kann beispielsweise durch feineingestellte Mischformen von Durchströmung und Über- oder Unterströmung die Konvektion gefördert oder ihr entgegengewirkt werden. Ebenso besteht die Möglichkeit, die Art des Wärmeüberganges aus der Miete zu steuern. Es kann zwischen den Konvektionen und leitungsbedingten Mechanismen gewählt werden und so der Grad der Koppelung des Wärmeentzuges an den Stofftransport bestimmt werden.

Die Strömungsrichtungen der Gasströmungsarten sind mit Hilfe der Reguliermittel wenigstens einmal während der Behandlung umkehrbar. Diese Maßnahmen haben folgenden Vorteil: hierdurch können z.B. unerwünschte Grenzflächenzustände ausgeglichen bzw. zerstört werden, etwa unerwünschte Austrocknungen an den Grenzflächen der Miete.

Nach den Patentansprüchen 5 und 22 sind die Gasströmungs-Reguliermittel für eine periodisch alternierende oder aperiodisch alternierende strömungsrichtungsumkehr wenigstens einer Gasströmung ausgelegt. Sowohl durch die periodisch als auch durch die aperiodisch alternierenden Umkehrungen der Strömungsrichtung lassen sich in bestimmten Fällen quasi-stationäre oder aber instationäre Strömungsverhältnisse erzeugen. Die Einstellung quasi-stationärer Zustände kann dabei von der Periodendauer bzw. der Frequenz des Wechsels der Strömungsrichtung abhängen. Sehr hochfrequente Richtungswechsel können dann zu instationären Strömungsverhältnissen führen, wenn sich aufgrund der hohen Frequenz keinerlei Gleichförmigkeit in der Strömung aufbauen kann. Auch durch diese Führung der Gasströme lassen sich unerwünschte Grenzflächenzustände aufheben oder ausgleichen. Durch geeignete Wechsel der Prozeßdaten-bestimmenden Parameter lassen sich bei großen Schichtdicken enge Temperatur- und Feuchtebereiche einhalten.

Nach den Patentansprüchen 6 und 23 erlauben die Gasströmungs-Reguliermittel eine laminare und/oder turbulente Führung wenigstens einer Gasströmung. Auch hierdurch lassen sich unerwünschte Grenzflächenzustände vermeiden oder aufheben. Auch können hierdurch die Intensität der Konvektion bzw. von Stoffübergängen, aber auch Wärmeübergänge beeinflußt werden.

Nach den Patentansprüchen 7 und 24 kann mit Hilfe der Gasstromungs-Reguliermittel zwischen einer laminaren und einer turbulenten Strömungsführung periodisch alternierend oder aperiodisch alternierend abgewechselt werden. Diese Maßnahmen erhöhen weiterhin die Möglichkeiten, den obengenannten unerwünschten Grenzflächenzuständen durch Anpassung der Wärmeübergangskoeffizienten entgegenzuwirken.

Nach den Patentansprüchen 8 und 25 weisen die Gasströmungs-Reguliermittel Regelventile und/oder verschiebbare Strömungshindernisse auf, einschließlich sogenannter Schikanen, mit welchen, etwa durch alternierenden Wechsel der Stellungen der Regelventile eine laminare Gasströmung in eine turbulente Gasströmung überführt werden kann. Auch hierdurch wird die Vielfalt der Mittel erhöht, mit welchen unerwünschten Grenzflächenzuständen entgegengewirkt werden kann. Dabei ist selbstverständlich zu berücksichtigen, daß die Miete selbst, einschließlich deren Oberflächenstruktur als Strömungshinderniss aufzufassen ist und bereits durch die Oberflächenstruktur der Miete im Grenzflächenbereich Wirbel oder Turbulenzen erzeugt werden können. Die Wirbel verändern regelmäßig lokal den Wärmeübergangskoeffizienten; ebenso den Gasaustausch - analog zu lokalen Strudeln in sonst laminaren Flüssigkeitsströmungen.

Nach den Patentansprüchen 9 und 26 die Gasströmungs-Reguliermittel wenigstens einen Stufenlos regulierbaren Ventilator und Regelventile auf mit welchen die Gasströme und die Verhältnisse der Gasströme zueinander stufenlos veränderbar sind. Durch diese Maßnahmen lassen sich folgende Vorteile erzielen: gezieltes Anfahren von Rottemassen heterogener Zusammensetzungen.

Nach den Patentansprüchen 10 und 27 sind die Reguliermittel zur Prozeßabhängigen manuellen, programmgesteuerten und/-oder rechnergestützten Ansteuerung der Regeleinrichtungen, insbesondere des Ventilators und der Regelventile ausgebaut. Durch diese Maßnahmen lassen sich folgende Vorteile erreichen: gezielter Übergang von einer Behandlungsphase in die andere, z.B. von der Inkubationsphase in die Hygienisiserungsphase.

Nach den Patentansprüchen 11 und 28 werden die Temperatur der Reaktorluft und/oder die Temperatur der Miete als Regelgröße ausgewählt und Prozeßabhängig angesteuert. Hierzu weisen die Gasströmungs-Reguliermittel Temperaturmeßeinrichtungen auf, die vorzugsweise in Verbindung mit Sollwertgebern, Komparatoren und Reglern zur prozeßabhängigen Steuerung oder Regelung ausgelegt sind. Hierdurch läßt sich die biogene Wärmebildung als schlecht einstellbare Größe besser in die Temperaturführung einbinden, etwa dadurch, daß zunächst die Reaktor luft bis zum Erreichen eines vorgegebenen Temperaturwertes und danach die Temperatur in der Miete geregelt wird. Dabei ist zu berücksichtigen, daß die Temperatur der Reaktorluft nur solange als Regelgröße dienen sollte, wie die Miete keine biogene Wärme an die Reaktorluft abgibt. Rechtzeitig vor diesem Zeitpunkt wird bevorzugt von einer Regelung der Temperatur der Reaktor luft zu einer Regelung der Temperatur der Miete übergegangen. Dabei kann dieser Zeitpunkt durch Vergleich der Temperaturen in der Reaktorluft und in der Miete häufig rechtzeitig ausreichend genau vorbestimmt werden.

Nach den Patentansprüchen 12 und 29 werden Temperaturdifferenzen in der Miete und/oder die Zustandsgrößen der Gasströme und/oder der Abluft, etwa die Temperatur, die Feuchte, das O₂/CO₂-Verhältnis, der Gasdruck, die Strömungsgeschwindigkeit und/oder das Durchsatzvolumen, als Regelgrößen verwendet. Hierzu weisen die Gasströmungs-Reguliermittel entsprechende Meßeinrichtungen zur Ermittlung der Temperaturdifferenzen und/oder zur Bestimmung der Ist-Werte der Zustandsgrößen der Gasströme und/oder der Abluft auf. Die Ausgangswerte der Meßeinrichtungen werden dann in Komparatoren mit den Ausgangswerten von Sollwertgebern verglichen und das Vergleichsergebnis, die sogenannte Regelabweichung, Reglern zugeführt. Deren Ausgangswerte werden dann zur Steuerung oder Regelung der genannten Temperaturdifferenzen und/oder Zustandsgrößen verwendet. Hierdurch lassen sich Milieuansprüche bestimmter Mikroorganismen oder Mikroorganismenarten (anaerob, aerob, Schutzbegasung bei hoher CO₂-Toleranz usw.) gezielt einstellen.

Nach den Patentansprüchen 13 und 30 werden die Gasströme in einem geschlossenen Umluftsystem mit oder ohne Frischlufteinspeisung geführt. Auch hierdurch läßt sich der Gashaushalt in bekannter Weise manipulieren.

Nach den Patentansprüchen 14 und 31 wird das Gas wenigstens eines Gasstromes in Konditioniereinrichtungen auf die gewünschten Zustandsgrößen konditioniert.

Nach den Patentansprüchen 15 und 32 wird ein definiertes Verhältnis zwischen Umluft und Frischluft durch einen zur Frischluftzufuhr korrespondierenden Umluftaustrag eingestellt, vorzugsweise über entsprechende Ventile.

Nach den Patentansprüchen 16 und 33 erfolgt die Konditionierung des strömenden Gases bevorzugt durch Einstellen von Temperatur, Druck und Inhaltsstoffen, etwa des Gehaltes an Stickstoff, Sauerstoff, Kohlendioxid, Ammoniak und/oder Wasser, um beispielsweise durch CO₂-Partialdruckerhöhung, CO₂-tolerante Mikrofloren vor Konkurrenten zu schützen.

Nach den Patentansprüchen 17 und 34 wird die Miete mittels einer Umsetzvorrichtung mechanisch umgesetzt, insbesondere umgewälzt. Diese Maßnahme dient der Lockerung und damit leichteren Durchströmbarkeit der Miete; ferner der Homogenisierung des Kompostmaterials und der Vergleichmäßigung der Milieuzustände in der Miete; schließlich, um Mikrokompartimente im Gemenge zu zerstören, damit Mikroorganismen und Substrat ständig neu gemischt werden und hierdurch ein vollständiger Abbau und Umbau ermöglicht wird.

Nach Patentanspruch 35 weist die Vorrichtung mehrere separate Reaktoren auf und ist das Umluftsystem als zentrale Belüftungseinrichtung ausgelegt. Bevorzugt sind dabei wenigstens einem oder mehreren, besonders bevorzugt allen Reaktoren Einrichtungen zugeordnet, die zur Reaktor-unabhängigen und individuellen Regulierbarkeit der den mikrobiellen Stoffumsatz bestimmenden Prozeßparameter ausgelegt sind. Hierdurch können die Milieuzustände mehrerer einzelner Reaktoren auf den jeweiligen Rottezustand und das zu verrottende Material feinfühlig und unabhängig voneinander reguliert werden. Nach Patentanspruch 36 sind hierzu die einzelnen Reaktoren wahlweise mit der zentralen Belüftungseinrichtung verbindbar, vorzugsweise über Regelventile. Nach Patentanspruch 37 ist weiterhin bevorzugt jeder Reaktor mit einer eigenen regelbaren Frischlufteinspeisung ausgestattet. Hierdurch wird der Grad der Unabhängigkeit der einzelnen Reaktoren weiter erhöht.

Nach Patentanspruch 38 weist ein Reaktor jeweils eine oberhalb und unterhalb an die Miete angrenzende Reaktorzone auf und sind diese Reaktorzonen jeweils über Gasströmungsleitungen und darin angeordnete Regelventile miteinander verbindbar. Hierdurch läßt sich die Vielfalt der Gasströmungsarten und deren Kombinationen erhöhen, was einer feinfühligen Regulierung der Milieuzustände entgegenkommt.

Nach Patentanspruch 39 sind die Gasströmungsleitungen und Regelventile gruppenweise spiegelbildlich symmetrisch zum Reaktor angeordnet. Hierdurch wird eine besonders übersichtliche Bauweise der Vorrichtung erzielt. Gleichzeitig wird hierdurch eine einfache Möglichkeit geschaffen, die Richtungen der Gasströme wahlweise umzukehren.

Nach Patentanspruch 40 werden die oberhalb und unterhalb der Miete liegenden Reaktorzonen zu beiden Seiten des Reaktors jeweils über eine, jeweils ein erstes Regelventil aufweisende Gasströmungsleitung miteinander verbunden. Hierdurch lassen sich besonders bequem nicht nur die Volumina sondern auch die Richtungen und Arten der Gasströmungen regulieren.

Eine Erhöhung der Reguliervielfalt wird durch den Gegenstand des Patentanspruches 41 erreicht, nämlich dadurch, daß zu beiden Seiten der ersten Regelventile jeweils ein zweites Regelventil in der Gasströmungsleitung angeordnet ist; insgesamt somit jeweils drei Regelventile in jeder der die beiden Reaktorzonen verbindenden Gasströmungsleitung.

Nach Patentanspruch 42 weist die Vorrichtung wenigstens einen oder zwei Ventilatoren auf, die jeweils über ein ihnen nachgeschaltetes drittes Regelventil mit einer zwischen dem ersten und dem zweiten Regelventil liegenden Stelle der Gasströmungsleitung verbunden ist. Hierdurch läßt sich eine weitere Erhöhung der Reguliervielfalt hinsichtlich der Gasströmungsarten, deren Richtungen und Kombinationen erzielen. Weiterhin kann der eine Ventilator den anderen jeweils zugeschaltet werden. Grundsätzlich können aber auch mit einem einzigen Ventilator praktisch alle Kombinationen von Gasströmungsarten eingestellt werden.

Nach Patentanspruch 43 weist diejenige Gasströmungsleitung, welche die den Ventilatoren abgewandten Enden der oberhalb und unterhalb der Miete liegenden Reaktorzonen miteinander verbindet, an einer zwischen ihren ersten und zweiten Regelventilen liegende Stelle eine Abzweigung für die Umluftleitung auf. Durch diese Abzweigung läßt sich der Umluftkreis schließen. Nach Patentanspruch 46 weist die Umluftleitung bevorzugt ein fünftes Regelventil auf, mit welchem sich der Strömungsquerschnitt der Umluftleitung regeln läßt, einmal im Sinne einer durchgängigen Umluftführung, zum anderen aber auch im Sinne eines Absperrens der Umluftleitung und damit Erzwingung einer vollständigen Umströmung der Miete.

Nach Patentanspruch 44 wird die Vielfalt der Gasströmungsvariationen dadurch erhöht, daß sich die Umluftleitung in zwei weitere Leitungen verzweigt, nämlich eine in die Konditioniereinrichtung mündende Gasströmungsleitung und eine in den Reaktor mündende weitere Gasströmungsleitung. Hierdurch lassen sich insbesondere, und zwar je nach Strömungsverhältnissen, Turbulenzeffekte erzielen. Deren Vielfalt kann durch eine weitere Verzweigung der in den Reaktorraum mündenden Leitung erhöht werden, insbesondere dann, wenn in den weiteren Zweigleitungen jeweils ein viertes Regelventil angeordnet ist (Patentanspruch 45).

Insgesamt ermöglicht also die Erfindung eine Strömungsvariante, bei der lediglich eine Überströmung der Miete stattfindet, eine gleichzeitige Durch- und Umströmung der Miete also unterbunden wird. Nach einer anderen Variante kann lediglich eine Durchströmung eingestellt werden, d.h. eine Über- und Umströmung unterbunden werden. Schließlich erlaubt es die Erfindung nur eine Umströmung einzustellen, eine gleichzeitige Über- und Durchströmung also zu unterbinden. Selbstverständlich können einige oder alle drei dieser Strömungsvarianten gleichzeitig eingesetzt werden.

Die Erfindung erlaubt Stoffumsetzungen unter definierten Bedingungen des Klimas und des Milieus. Drei verschiedene Betriebsweisen sind einstellbar:
1. Stationäre Betriebsweise - ausgewählter Prozeß ohne zeitabhängige Einflußnahme auf vorgegebene und/oder angestrebte Zustandsgrößen.
2. Quasi-stationäre Betriebsweise - Wechsel stationärer Betriebsweisen:
   - Alternierende Belüftung durch Umkehr der Strömungsrichtung,
   - Beliebige Kombination der Varianten.
3. Instationäre Betriebsweise - Wechsel der Belüftung, bevor stationäre Verhältnisse eintreten:
   - reine Umkehr der Strömungsrichtung
   - beliebige Kombination von Varianten
   - Veränderung von Verhältnissen
   - permanente Veränderung der Verhältnisse durch angewählte Zeitintervalle.

Die vorstehend genannten Betriebsweisen erlauben die Gemengemiete wahlweise verschiedenen Strömungsvarianten auszusetzen. Hierdurch ist ein äußerst flexibles Steuerungssystem und Verfahren zur Verfügung gestellt, mit dessen Hilfe die sehr unterschiedliche biologische Aktivität von Reststoffgemengen kontrollierbar wird. Definierte Milieuzustände im Rottegut lassen sich über das Umluftsystem erzeugen, das ein vorgegebenes Klima auf das festere Stoffgemenge überträgt, insbesondere durch Änderung der Strömungsparameter und -führung, einschließlich wahlweises Überströmen und/oder Unterströmen und/oder Durchströmen und/oder Umströmen der Miete.

Der Gasaustausch in ruhenden Feststoffgemengen kann auf freier Konvektion und auf Durchströmung mit eingeblasener Luft abgestellt sein. Weder die eine noch die andere Methode erlaubt allein eine Feinabstimmung auf die Bedürfnisse des mikrobiellen Stoffumsatzes. Die variable Kombination einer Überströmung zur Beeinflussung der Konvektion mit einer Durchströmung durch eine vernetzte regelbare Luftführung wurde bisher nirgends verwirklicht. Welche verfahrenstechnischen Möglichkeiten hierdurch erschlossen werden, sei nachstehend kurz skizziert:

Definierte Milieuzustände im Rottegut lassen sich nur erzeugen, wenn das Umluftsystem eine Strömungsführung ermöglicht, die das eingeregelte Klima auf ein festes Reststoffgemenge überträgt, dessen Dichte verschieden sein kann. Die Luftvolumenstromführung muß so flexibel ausgelegt und handhabbar sein, daß die sehr unterschiedliche biologische Aktivität von Reststoffgemengen kontrollierbar bleibt. Dies geschieht durch Änderungen der Strömungsparameter und - führung sowie der Konditionierung des Strömungsmediums (z.B. Temperatur, Druck, pH, Feuchte, O₂-Gehalt, CO₂-Gehalt,, Entnahme von Stoffen wie Ammoniak). Durch die manuelle oder programmierte Vorgabe und/oder rechnergestützte Veränderung variabler strömungsführungen und -geschwindigkeiten gelingt es, unerwünschte Wärmebildungen und -staus zu unterdrücken bzw. Überschußwärme aus dem System zu entfernen, ohne daß andere prozeßrelevante Parameter nachhaltig verändert werden. Daraus erwachsen Vorteile, die sich wie folgt beschreiben lassen:

Die Temperaturplateaus für an allgemeinen (z.B. Kompostierungsprozeß) und speziellen Stoffwechselleistungen (z.B. Metabolitgewinnung der Pharmaindustrie) beteiligten Mikrofloren können gezielt gesteuert werden. Am Kompostierungsprozeß lassen sich die Zusammenhänge und Abhängigkeiten am besten darstellen. Die Hygienisierung läßt sich thermisch und biochemisch bei Temperaturen < 60°C optimal erreichen. Geruchsstoffe werden immer wieder durch das Rottegut recycliert und dabei abgebaut. Im Laufe der Prozeßführung wird der Stoffumsatz über angeregelte Temperaturprofile so optimiert, daß bestimmte Substanzklassen bevorzugt um-, auf- und abgebaut werden. Die Zufuhr des Sauerstoffs kann so geregelt werden, daß zwischen strikter Anaerobie und strikter Aerobie alle Zustände über die Gasphase im Umluftsystem stufenlos dargestellt werden können und eine Spreizung der Temperatur- und Milieuverhältnisse im Feststoffgemenge vermieden wird. Aus dieser Bioprozeßführung resultieren kürzere Verweilzeiten, die den Betrieb geschlossener Rotteanlagen wirtschaftlicher gestalten.

In ihrer Umluftausführung bietet eine Kompostierungsanlage mit mehreren Reaktoren den Vorteil zunächst eine Basiskonditionierung der zirkulierenden Umluft unabhängig vom Volumen unter Frischlufteinspeisung vornehmen zu können. Letztere dient nunmehr der Einstellung eines gewünschten Sauerstoffgehaltes. Die Prozeßparameter der angeschlossenen Reaktoren werden fein abgestimmt, und zwar individuell und unabhängig voneinander auf die in jedem Reaktor einzeln gewünschten Prozeßbedingungen unter Berücksichtigung der dortigen Prozeßverhältnisse.

Die angeschlossenen Reaktoren können beispielsweise wie folgt betrieben werden.
1. Die angeschlossenen Reaktoren besitzen eine Einrichtung zur Nachkonditionierung über Heiz-, Kühlungs- und Befeuchtungsregister für die Luftmengen, die intern das Rottegut durchströmen. Bei einem entsprechenden Luftmengendurchsatz wird sichergestellt, daß das Raumklima mit dem Gemengeklima identisch ist. Die Abluft wird der zentralen Umluft zugeführt und wieder integriert. Überschußluft wird über Biofilter abgegeben. Bei dieser Prozeßführung kann die zentrale Umluft sauerstoffarm gefahren werden, wenn die semi-anaerobe oder anaerobe Milieukonditionierung gefordert ist. Außerdem besitzen die Reaktoren eine eigene Frischlufteinspeisung.
2. Die angeschlossenen Reaktoren besitzen zusätzlich oder anstelle der Nachkonditionierung über Heiz-, Kühlungs- und Befeuchtungsregister ein eigenes Umluftsystem, dessen Strömungsparameter separat und individuell einstellbar sind. Das gewünschte Klima im Reaktor stellt sich innerhalb kürzester Zeit ein und kann über Luftteilströme aus der zentralen Luftaufbereitung stabilisiert werden. Der gewünschte Sauerstoffeintrag kann über die eingespeiste Umluft und/oder separate Frischlufteinspeisung erfolgen. Korrespondierende Abluftmengen werden in die zentrale Umluft integriert. Überschüssige Luftmengen werden über einen zentralen Biofilter abgegeben.
3. Schließlich können die einzelnen Reaktoren auch untereinander verbunden werden, etwa für einen Wärmeaustausch oder aber eine Nutzung der am weitesten fortgeschrittenen Rotte als Biofilter der noch am wenigsten umgesetzten Rotte, also der frischesten Miete, insbesondere nach Abschluß der Hygienisierungsphase.

Die Grundaufbereitung der Umluft läßt sich auf die Bandbreite der Bedürfnisse von Reaktoren unterschiedlich gerotteten Inhaltes umso leichter zuschneiden, je identischer die Zusammensetzung der jeweiligen Ausgangsgemenge in den Reaktoren ist. Hier kommt es auf die Einhaltung erarbeiteter Rezepturen an. Die separate Umluftführung gestattet die Einstellung von Strömungsparametern, welche die biologischen Aktivitäten des jeweiligen Reaktorgemenges in die gewünschten Bahnen lenken. Dies gilt z.B. für den Aufbau des Temperaturplateaus bei der Hygienisierung, für den Abbau von Temperaturspitzen, die Vermeidung von Wärmestaus oder die Führung von Temperaturprofilen. Mit der internen Umluftführung wird außerdem erreicht, daß Geruchsstoffe über das reaktoreigene Rottegemenge als interne Biofilter abgebaut werden. Dies entlastet das zentrale Umluftsystem und das ihm angeschlossene externe Biofilter.

Weitere bevorzugte Merkmale der Erfindung ergeben sich aus der nachfolgenden Beschreibung bevorzugter Ausführungsbeispiele. Diese Ausführungsbeispiele sind schematisch in den beigefügten Zeichnungen dargestellt.

### Kurze Beschreibung der Zeichnungen

In den Zeichnungen zeigen:
- Abb. 1: die Stoffumsatzdynamik während der Kompostierung;
- Abb. 2.1: ein Schema eines Umluftsystems für geschlossene Reaktoren
- Abb. 2.2: ein weiteres Schema eines Umluftsystems für geschlossene Reaktoren
- Abb. 3.1: ein Schema eines Umluftsystems für mehrere separate Reaktoren
- Abb. 3.2: ein Detail eines einzelnen Reaktors mit Umluftanschluß nach Abb. 3.1
- Abb.4.1 bis 4.3: verschiedene Luftströmungsarten und -varianten
- Abb. 5: eine Steuertabelle zur Steuerung der in den Abb. 2.1 bis 3.2 dargestellten Regelventile und Ventilatoren für die Einstellung der in Abb. 4.1 bis 4.3 dargestellten Luftströmungsarten und -varianten.

### Beispiele zur Ausführung der Erfindung

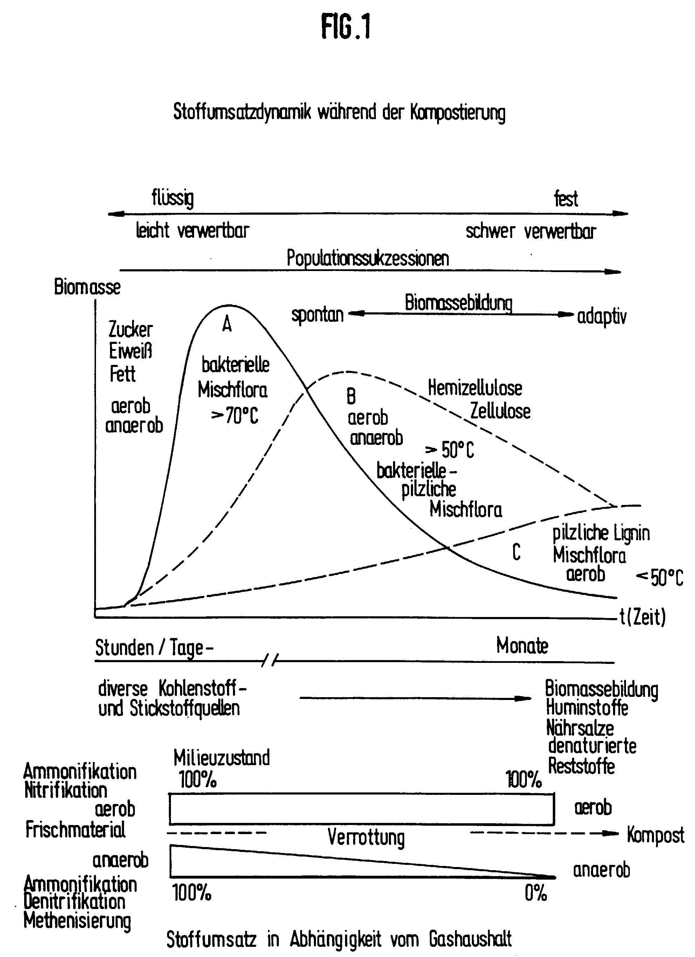

Abb. 1 veranschaulicht den während der Kompostierung ablaufenden bekannten dynamischen Prozeß der Biomassebildung und des Stoffumsatzes in Abhängigkeit von der Zeit und der jeweiligen Mikroflora. Dabei werden die leichtverwertbaren Kohlenstoff- und Stickstoffverbindungen mineralisiert. Da dieser Prozeß rasch verläuft, kommt es zu Erwärmungen bis zu 80°C. Diese Phase der Kompostierung dient der Hygienisierung und dem Abbau der Stinkstoffe.

Nach dem Abbau jener Stoffklassen, die vorzugsweise von der bakteriellen Mischflora abgebaut werden können, kommt es zu Änderungen in der Populationszusammensetzung. Diese besteht nun aus Bakterien und Pilzen, wie in Abb. 1 dargestellt. Danach mündet der Kompostierungsprozeß in den ausschließlich oxidativen Stoffabbau ein. In dieser Phase bauen überwiegend aerobe Pilzfloren die Lignozellulose langsam ab.

Für den Kompostierungsprozeß ist charakteristisch, daß der Stoffumsatz zu Beginn sowohl unter aeroben als auch unter anaeroben Bedingungen ablaufen kann. Dies ist der Grund, warum deponiertes Frischmaterial zur Bildung von Faulgasen führt. Die Kompostierung dagegen mündet in einen Stoffumsatz ein, der strikte Aerobie erforderlich macht, wie in Abb 1 dargestellt. In diesem Stadium kommt der mikrobielle Stoffumsatz vollständig zum Erliegen, wenn die Sauerstoffzufuhr unterbunden wird. Dies kann leicht demonstriert werden. Ein Plastiksack, in dem End- oder Stabilkompost luftdicht verpackt ist, nimmt nach einiger Zeit das Aussehen einer vakuumversiegelten Erdnußpackung an. Durch den Sauerstoffverbrauch der Mikroflora entsteht im Plastiksack ein Unterdruck. Würde das Stadium des Stabilkompostes noch nicht erreicht worden sein - könnte also unter den herrschenden Bedingungen noch eine anaerobe Mikroflora tätig werden - käme es nachgewiesenermaßen zu Gasbildungen (N₂ oder N₂O, Methan, Stinkgase). Der Sack würde sich aufblähen.

Während der Kompostierung wird unter Volumenreduktion (ca. 50 % Rotteverlust) Dauerhumus gebildet, der folgenden Stoffumsatz zur Grundlage hat. Der oxydative Abbau des dreidimensional vernetzten Lignin-Makromoleküls verläuft über Bruchstücke, die entweder vollständig mineralisiert oder zusammen mit mikrobiell gebildeten autooxydablen Phenolen zu Huminstoffen repolymerisiert werden. Dieser biologisch induzierte und chemisch katalysierte Prozeß ist in die Dynamik des Stoffumsatzes dergestalt eingebunden, daß ein Kompost entsteht, dessen organische Substanz eine zunehmende Persistenz gegen den mikrobiellen Abbau unter den Stoffumsatzbedingungen der aquatischen und terrestischen Ökosysteme aufweist.

Die Erfindung stellt darauf ab, der jeweils gewünschten Mikroflora einen Selektionsvorteil dadurch zu gewähren, daß die für diese Flora optimalen Umgebungsparameter, wie Temperatur, Feuchtigkeit und Gaszusammensetzung gezielt angesteuert werden und damit der Mikroflora eine ihr optimale Umgebung zur Verfügung gestellt wird.

In dieser Anmeldung werden für gleiche oder funktionsgleiche Teile durchgehend in allen Ausführungsbeispielen gleiche Bezugszeichen verwendet.

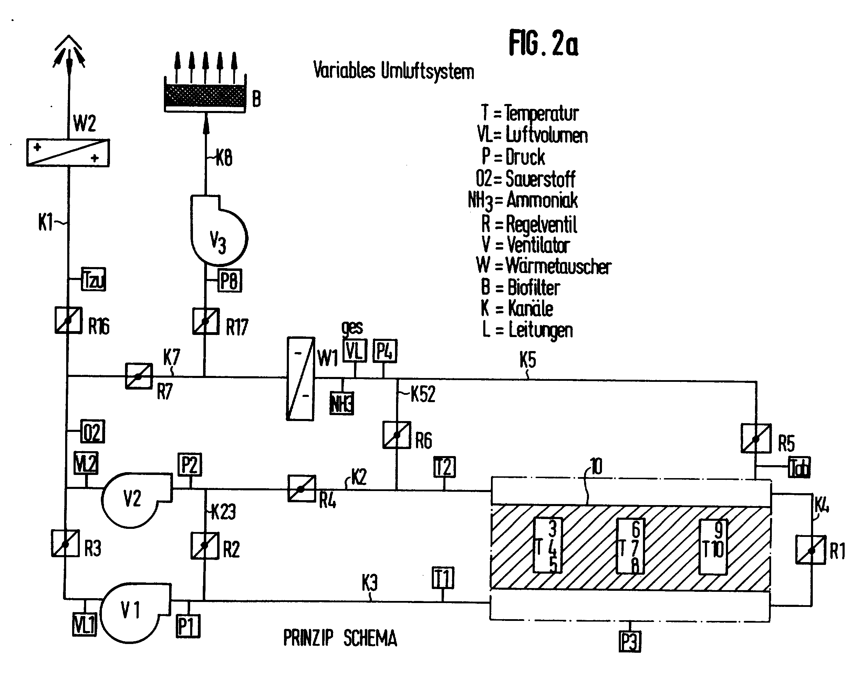

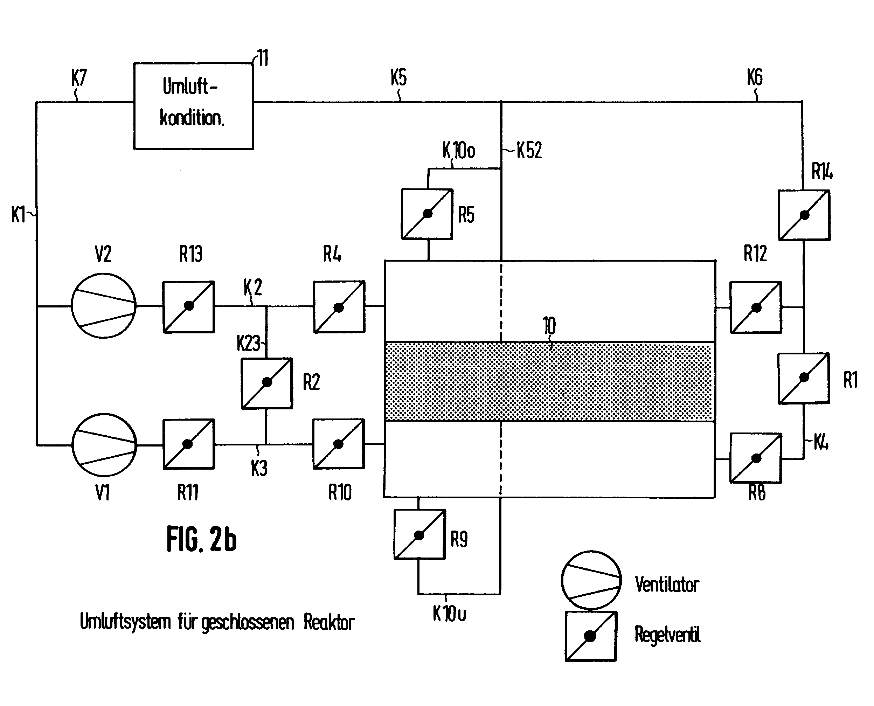

Abb. 2.1 zeigt das Schema eines ersten Ausführungsbeispiels für eine erfindungsgemäße Kompostieranlage. Danach kann Umluft bei geöffnetem Regelventil R5 über einen Wärmetauscher W1 geführt werden. Die Wärmegewinnung im Wärmetauscher W1 wird bevorzugt dazu verwendet, über einen Wärmetauscher W2 Frischluft zu temperieren, die über einen Kanal K1 einströmt. Der Frischlufteintrag wird über ein Regelventil R16 gesteuert und über zwei parallel geschaltete Ventilatoren V1 und V2 einem oberhalb und einem unterhalb einer Miete 10 angelegenen Reaktorasraum zugeführt. Die Miete 10 sowie die Reaktorgasräume werden im folgenden auch Reaktorzonen genannt. Der korrespondierende Luftaustrag wird bei geöffnetem Regelventil R17 über einen in Reihe mit den beiden Ventilatoren V1 und V2 geschalteten Ventilator V3 vorgenommen. Die ausgeblasene Luft wird hierbei über einen Biofilter B geführt.

Im Kanal K1, ist hinter dem Wärmetauscher W2 ein Temperaturfühler T_{zu} zugeordnet, welcher die Temperatur der zugeführten Luft mißt. Seine Ausgangsdaten werden einem (nicht gezeigten) Prozeßrechner zur elektronischen Steuerung des Kompostierungsprozesses zugeführt.

Unterhalb des Regelventiles R16 ist im Kanal K1 ein Fühler O₂ zur Ermittlung des O₂ Gehaltes angeordnet. Auch dessen Ausgangswerte werden dem Prozeßrechner zugeführt. Der Kanal K1 verzweigt sich in einen Kanal K2, in welchem der Ventilator V2 angeordnet ist. Vor dem Ventilator V2 ist ein Fühler VL2 angeordnet, welcher das Luftvolumen mißt. Dessen Ausgangswert wird wiederum dem Prozeßrechner zugeführt. Dem Ventilator V2 ist ein weiterer Fühler P2 nachgeschaltet, welcher den Strömungsdruck mißt. Der Kanal K2 mündet in die Reaktorzone oberhalb der Miete 10. Er enthält, dem Ventilator V2 nachgeschaltet, ein Regelventil R4, das durch den Prozeßrechner ansteuerbar ist. Auch der Ventilator V2 ist durch den Prozeßrechner ansteuerbar. Unmittelbar vor der Mündung des Kanales K2 in den Gasraum oberhalb der Miete 10 ist ein weiterer Temperaturfühler T2 angeordnet, dessen Ausgangssignal wiederum dem Prozeßrechner zugeführt wird.

Die obere Reaktorzone mündet in einen Kanal K5, der mit einem Temperaturfühler Tab bestückt ist. Dessen Meßwerte werden wiederum dem Prozeßrechner zugeführt. Der freie Strömungsquerschnitt des Kanales K5 wird durch das Regelventil R5 gesteuert. Der Kanal K5 wird schließlich über den Wärmetauscher W1 einem Verzweigungspunkt zugeführt, von welchem die Kanäle K7 und K8 abgehen. Der Kanal K7 ist über ein vom Prozeßrechner ansteuerbares Regelventil R7 in den Kanal K1 rückgeführt. Der freie Strömungsquerschnitt des Kanales K8 wird durch ein weiteres Regelventil R17 eingestellt. Dem Regelventil R17 nachgeschaltet ist ein Druckfühler P8, dem der Ventilator V3 nachgeschaltet ist. Der Ventilator V3 bläst die Abluft über den Biofilter B ins Freie.

Dem Wärmetauscher W1 unmittelbar vorgeschaltet sind ein weiterer Druckfühler P4, ein Luftmengenfühler VL_{ges} und ein NH₃-Fühler NH₃. Die Ausgangswerte dieser Fühler werden ebenfalls dem Prozeßrechner zugeführt.

Vor den letztgenannten Fühlern zweigt vom Kanal K5 ein Kanal K52 ab, der über ein Regelventil R6 mit dem bereits genannten Kanal K2 verbunden ist.

Der Kanal K1 ist über seine zum Ventilator V2 führende Verzweigungsleitung hinaus weitergeführt, nämlich zum Ventilator V1. Zwischen den Ventilatoren V2 und V1 befindet sich im Kanal K1 ein - wiederum vom Prozeßrechner steuerbares - Regelventil R3. Unmittelbar vor dem Ventilator V1 mißt ein Luftvolumenfühler VL1 das zum Ventilator V1 strömende Luftvolumen. Der Ventilator. V1 bläst Luft über den Kanal K3 in den Reaktorgasraum unterhalb der Miete 10. Dem Ventilator V1 ist wiederum ein Druckfühler P1 nachgeschaltet, und zwar vor einer Verzweigungsleitung K23, welche den Kanal K2 mit dem Kanal K3 über ein Regelventil R2 verbindet. Unmittelbar vor der Mündung des Kanales K3 in die Reaktorzone unterhalb der Miete 10 ist noch ein Temperaturfühler T1 angeordnet.

Ein Druckfühler P3 mißt den Druck im Gasraum unterhalb der Miete 10. Die Gasräume unterhalb und oberhalb der Miete 10 sind über einen Kanal K4 miteinander verbunden. Ein Regelventil R1 steuert den freien Strömungsquerschnitt im Kanal K4.

Schließlich sind in der Miete 10 noch mehrere Temperaturfühler T3, T4, T5, T6, T7, T8, T9 und T10 angeordnet.

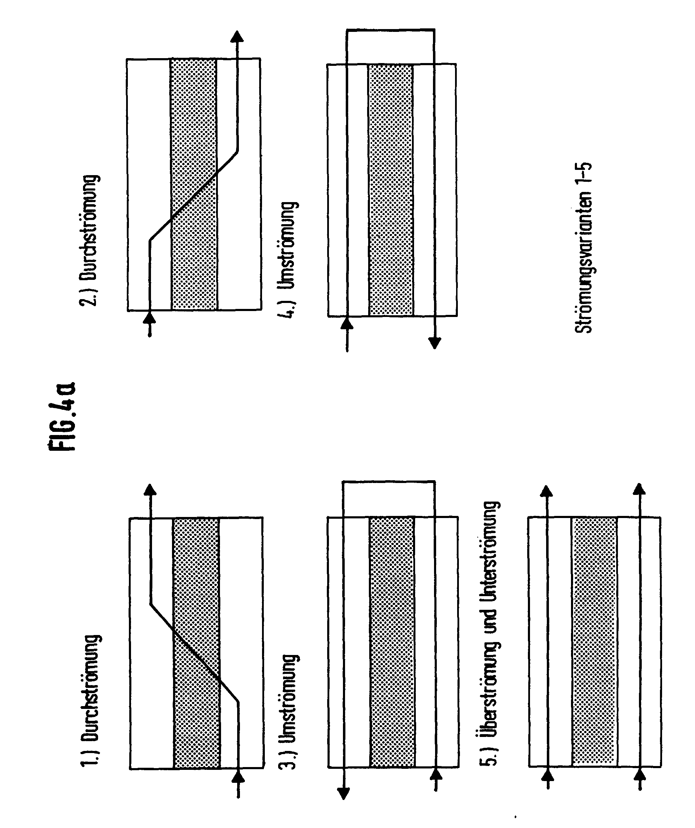

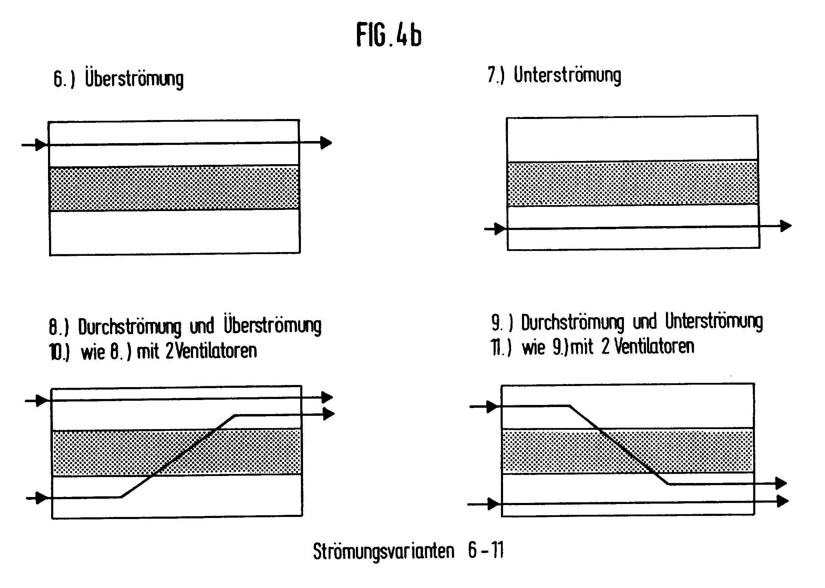

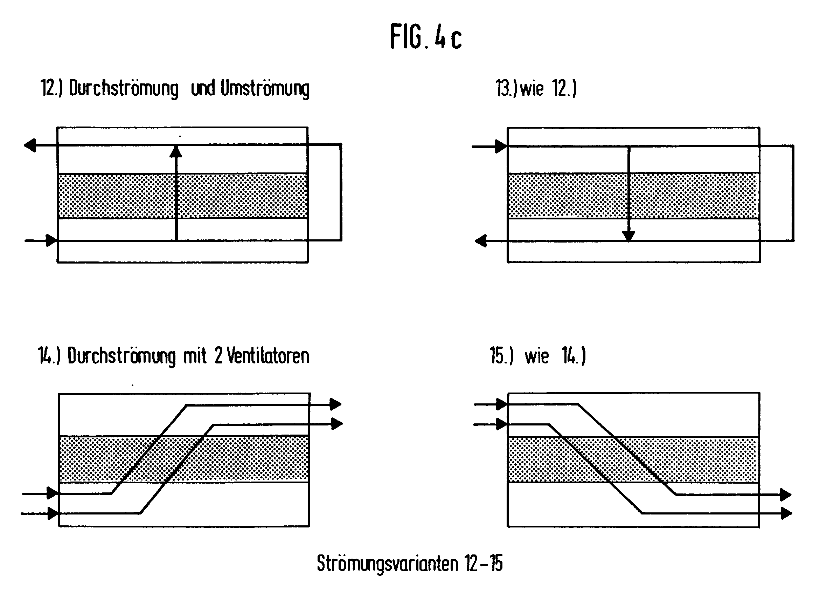

Das Regelventil R1 ermöglicht im Zusammenspiel mit den anderen Regelventilen insbesondere die in Abb. 4.1 und 4.2 unter Beispiel 1, 3, 5, 6, und 8 dargestellten Gas-, insbesondere Luft-Strömungsvarianten. Beim dargestellten Ausführungsbeispiel sind die Regelventile prozeßrechnergesteuert und werden die Ausgangsdaten sämtlicher Meßgeräte dem Prozeßrechner zugeführt. Ebenso prozeßrechnergesteuert sind die Leistungen der 3 Ventilatoren V1, V2 und V3.

Das dargestellte Ausführungsbeispiel veranschaulicht die ungemeine Vielfältigkeit der mit ihm erzielbaren Strömungsvarianten mit Hilfe nur zweier Ventilatoren und der genannten Regelventile. Erst die Vielfalt der Strömungsvarianten ermöglicht das genaue und feinfühlige Zuschneiden der Prozeßparameter auf den jeweils gewünschten mikrobiellen Stoffumsatz, d.h. die Anpassung der Prozeßparameter an die jeweils gewünschte Mikroflora. Erst hierdurch kann biologisch wirksam auf den Stoffumsatz eingewirkt werden.

Insgesamt wird ein Umluftsystem für geschlossene Rottesysteme dargestellt, bei welchen die Strömungsparameter und die Strömungsführung an die Zwecke einer definierten biochemischen Prozeßführung feinfühlig anpaßbar sind. Durch diese Anpassung kann die Prozeßführung variabel gestaltet werden. Ruhende oder durchmischte Mieten können über-, durch- oder umströmt werden. Auch alle Kombinationen dieser Strömungsvarianten werden möglich. Insgesamt gelingt es, über die Einhaltung gewünschter Klima- und Milieuzustände, den mikrobiellen Stoffumsatz feinfühlig anzusteuern und zu regeln.

Um die Leistung der beiden Ventilatoren V1, V2 kombinieren zu können, ist die Verknüpfung der Unterströmung mit der Überströmung durch den Kanal K4 mit eingebautem Regelventil R1 eine Problemlösung, die erhebliche Vorteile gegenüber dem Stand der Technik besitzt. Sie dient insbesondre den anhand der Abb. 4.1 bis 4.2 unter 1, 3, 5, und 8 dargestellten Strömungsvarianten.

Demgegenüber beschreibt das eingangs genannte Dokument **GRABBE** (WO 92/07807) eine relativ einfache Kanalausstattung unter Einschränkung der Gasführungsvarianten. Erst die Kanalvernetzung mit den entsprechenden Regelventilen ermöglicht die Vernetzung der Ventilatorleistungen und Gasströme. Dabei ist das von Hand oder rechnergestützt stufenlos vertrimmbare Regelventil R1 von großer Bedeutung. Dadurch werden Feinabstimmungen bei der Bioprozeßführung in bisher nicht gekannter Qualität möglich.

Abb 2.2 zeigt ein Schema eines weiteren Ausführungsbeispiels der Erfindung. Dieses Ausführungsbeispiel übernimmt die Ventilatoren V1 und V2, die Regelventile R1, R2, R4, und R5, die Leitungsbahnen K1, K2, K3, K4 und K5 sowie die Reaktorzonen des vorangegangenen Ausführungsbeispiels (vgl. Abb. 2.1). Es ergänzt jedoch jenes durch die Regelventile R8, R9, R10, R11, R12 und R14, die Leitungsbahnen K6 und K10, sowie die Umluftkonditionierung 11. Die genaue Anordnung der vorgenannten Elemente ist aus der Abb. 2.2 ersichtlich, auf die hiermit ausdrücklich hingewiesen wird. Danach kann in dem Belüftungssystem für geschlossene Reaktoren jede beliebige Kombination der folgenden Gasströmungsarten ausgewählt werden: Durch-, Über-, Unter- und Umströmen der Miete 10. Dies geschieht durch wahlweise Kombination der Regelventile zu unterschiedlichen Regelsystemen mit wenigstens einem laufenden Ventilator. Dabei ermöglicht die wahlweise Kombination der in Abb. 2.2 dargestellten Regelventile R1, R2, R4, R5, R8, R9, R10, R11, R12, R13, und R14 die Einstellung oder stufenlose Regelung der Strömungsvarianten. Insbesondere lassen sich die in Abb. 4.1 bis 4.3 unter Beispiel 1-15 (ohne die Strömungsvarianten 10, 11, 14, und 15) dargestellten Strömungsvarianten mit nur einem Ventilator und einem Regelsystem darstellen.

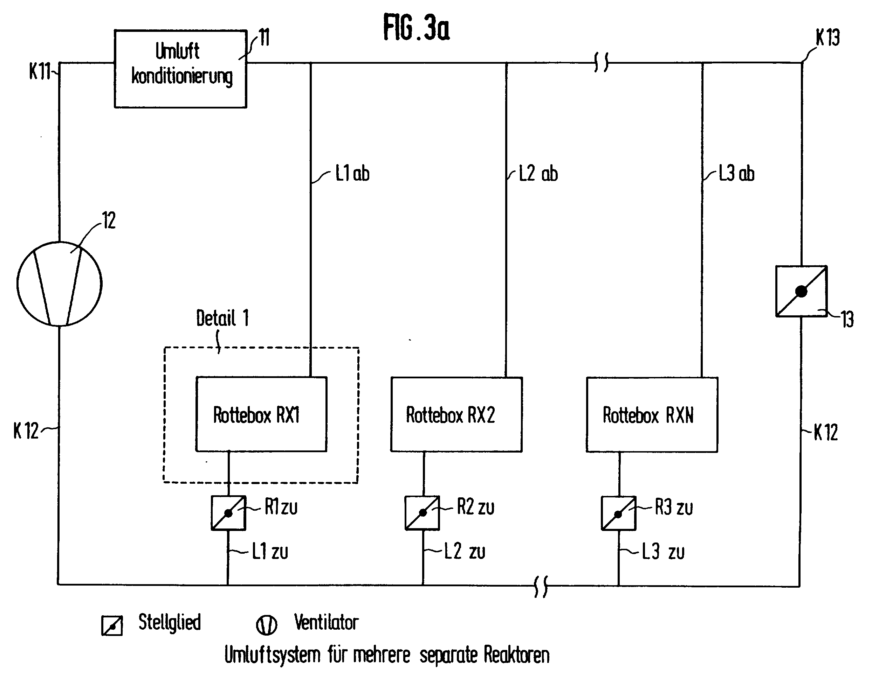

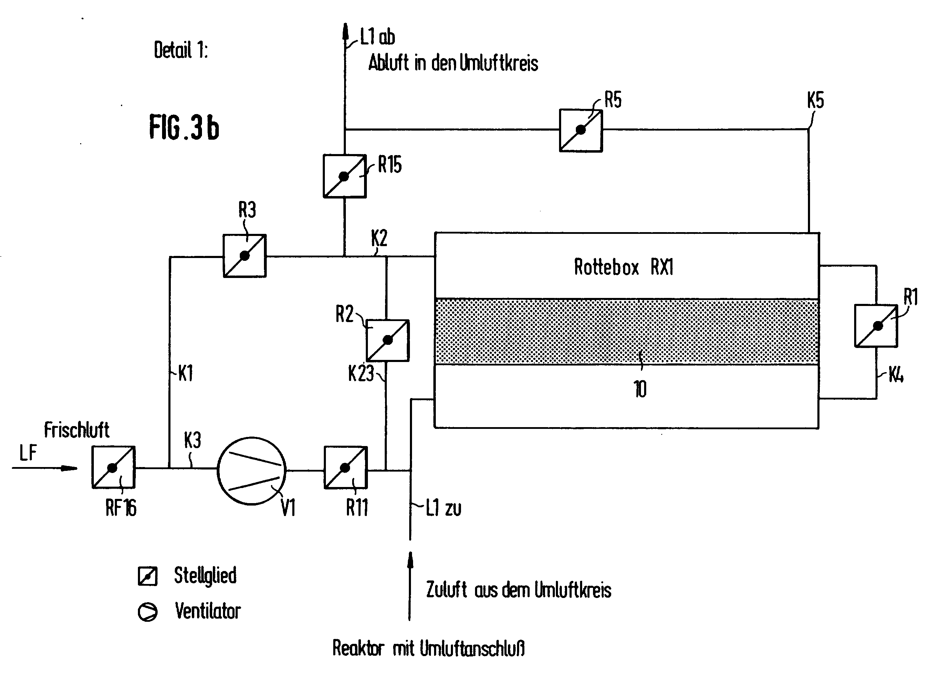

Abb. 3.1 zeigt ein Schema eines weiteren Ausführungsbeispiels der Erfindung. Danach kann das Umluftsystem (vgl. Abb. 2.1 und 2.2) nicht nur für einen einzigen Reaktor zur Konditionierung der Umluft eingesetzt werden, sondern ermöglicht die Konditionierung der Umluft mehrerer separater Reaktoren, auch Rotteboxen RXl, RX2, ... RXN genannt. Dies wird durch Kopplung der Zuluftführungen der einzelnen Reaktoren mit einer zentralen Belüftungseinrichtung 11, 12, 13 über reaktorständige Regelventile R1_{zu} bis RN2_{zu} erreicht. Dabei ist das Regelventil R1_{zu} ständig der Rottebox RX1, das Regelventil R2_{zu} ständig der Rottebox RX2, usw. zugeordnet.

Gemäß Abb. 3.1 weist die Kompostierungsanlage mehrere separate Reaktoren, Rotteboxen RX1, RX2, RXN auf, die jeweils über Zu- und Ableitungen L1_{zu}, L1_{ab}, L2_{zu}, L2_{ab}, LN_{zu}, LN_{ab} mit der zentralen Belüftungseinrichtung 11, 12, 13 verbunden sind. Die zentrale Belüftungseinrichtung weist eine Umluftkonditionierung 11 auf, die über einen Kanal K11 mit einem Hauptventilator 12 verbunden ist. Der Hauptventilator 12 ist über einen Kanal K12 mit einem steuerbaren Hauptregelventil 13 verbunden. Das Hauptregelventil 13 schließlich ist über einen Kanal K13 wieder mit der Umluftkonditionierung 11 verbunden. Die Umluftkondionierung 11, der Hauptventilator 12 und das Hauptregelventil 13 sind seriell hintereinandergeschaltet. Gemeinsam bilden diese Einrichtungen mit den Kanälen K11 bis K13 eine Umluftschleife.

Die Leitungen L1_{zu} bis LN_{zu} zweigen vom Kanal K12 ab und führen zu den jeweiligen Rotteboxen RX1, RX2, RXN. Die Leitungen L1_{ab} bis LN_{ab} verbinden die Rotteboxen RX1, RX2, RXN mit dem Kanal K13. Jede der Leitungen L1_{zu} bis LN_{zu} enthält ein steuerbares Regelventil R1_{zu}, R2_{zu} bzw. R3_{zu}. Somit bilden auch die Umluftkonditionierung 11, der Kanal K11, der Hauptventilator 12, der Kanal K12 und jede der Zu- und Ableitungen L1_{ab} bis LN_{ab} zusammen mit der Rottebox eine Zweigschleife.

Abb.3.2 zeigt das Flußschema eines Einzelreaktors des Ausführungsbeispiels der Erfindung nach Abb. 3.1. Danach verfügt jeder Einzelreaktor über eine eigene regelbare Frischluftzuführung LF, RF16 und mindestens einen Ventilator, mit dem eine reaktorspezifische Umluftführung und -steuerung der Luftströmungsvarianten sowie eine Kopplung des laufenden Systems an das Umluftsystem über die Umluftanschlußleitungen L1_{zu}, L1_{ab}) und Regelventile R15, R7 steuerbar ist.

Stellvertretend für alle Einzelreaktoren ist die Rottebox RX1 mit individuell zugehörigem Luftführungssystem gezeigt. Die Miete in Rottebox 1 hat wiederum das Bezugszeichen 10.

Das individuelle Umluftsystem für die Rottebox RX1 weist die Frischluftzufuhrleitung LF auf, die Frischluft über ein Regelventil RF16 zuführt. Die Leitung LF teilt sich nach dem Regelventil RF16 in eine Zweigleitung K3 mit eingebautem Ventilator V1 und nachgeschaltetem Regelventil R11. Die Leitung K3 führt in die Zufuhrleitung L1_{zu}, die unterhalb der Miete 10 in die Rottebox RX1 mündet. Die Leitung K4 verbindet über das Regelventil R1 die Gasräume unterhalb und oberhalb der Miete 10, und zwar auf dem der Zuführleitung L1_{zu} gegenüberliegenden Ende der Rottebox RX1. An dem der Leitung K4 gegenüberliegenden Ende der Rottebox RX1, also dem gleichen Ende, in das die Zufuhrleitung L1_{zu} einmündet, führt die Leitung K2 aus dem Gasraum oberhalb der Miete 10 aus der Rottebox RX1 heraus. Diese Leitung K2 ist über das weitere regelbare Ventil R3 und die Leitung K1 zur Leitung K3 zurückgeführt, und zwar an einem Punkt zwischen dem Regelventil RF16 und dem Ventilator V1. Die eben beschriebenen Verbindungen stellen eine erste Umluftschleife für die Rottebox RX1 dar.

Die Leitung K2 zweigt zwischen der Rottebox RX1 und dem Regelventil R3 in die Leitung L1_{zu} ab, und zwar über ein weiteres Regelventil R15. Zusätzlich sind die Leitungen K3 und K2 über ein weiteres Regelventil R2 und eine Leitung K23 miteinander verbunden, und zwar unmittelbar vor der Rottebox RX1. Die Leitung K5 verbindet über das Regelventil R5 die Reaktorzone oberhalb der Miete 10 mit der Abluftleitung L1_{ab}. Die Leitung K5 geht von demjenigen Ende der Rottebox RX1 aus, welches der Leitung K4 unmittelbar benachbart ist. Sie mündet in die Leitung L1_{ab} hinter dem Regelventil R15.

Diese Art der Luftführung ermöglicht wahlweise eine Überströmung, eine Unterströmung, eine Umströmung und/oder eine Durchströmung der Miete 10, und zwar grundsätzlich in der gleichen Weise, wie in den Ausführungsbeispielen der Abb. 2.1 und 2.2.

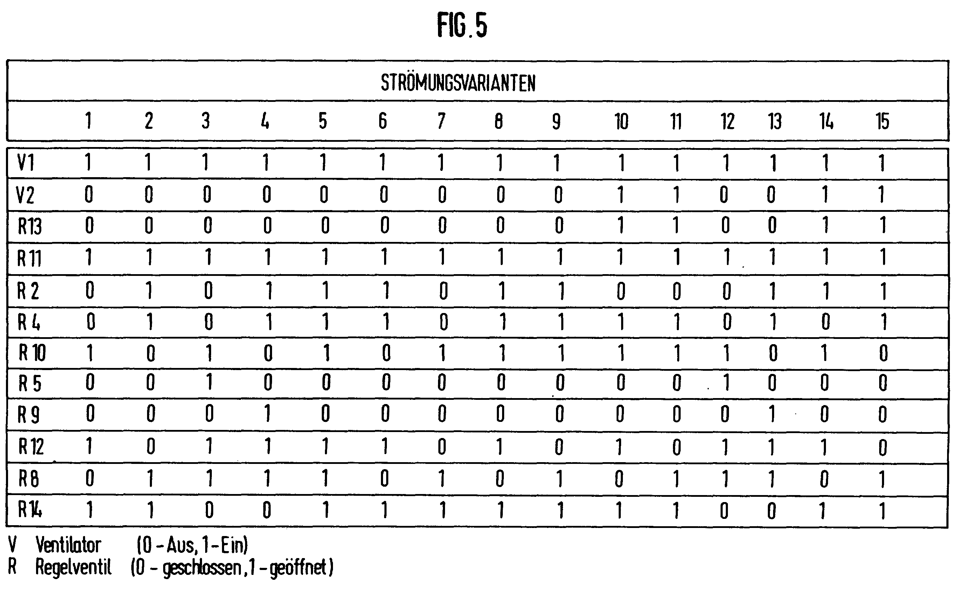

Die Abb. 4.1 bis 4.3 stellen die verschiedenen erfindungsgemäßen Luftströmungsarten und -varianten dar, wobei die jeweils zugehörige Stellung der Ventile und der Schaltungszustand der Ventilatoren in Abb. 5 wiedergegeben sind:

### Beispiele 1.)/2.) Durchströmung der Miete 10 von unten nach oben bzw. von oben nach unten.

Im Falle der Durchströmung von unten nach oben (Beispiel 1, Abb. 4.1) wird der Ventilator V2 abgeschaltet und werden die Regelventile R2, R4, R5, R8, R9 und R13 geschlossen. Die Regelventile R10, R11, R12 und R14 werden geöffnet. Zur Verstärkung kann der (beispielsweise schwächer ausgelegte) Ventilator V2 seriell zugeschaltet und die Regelventile R2 und R13 geöffnet werden. Die Stellung der Regelventile und Ventilatoren des Beispiels 2 in Abb. 4.1 sind in Abb. 5 angegeben.

### Beispiele 3.)/4.) Umströmung der Miete 10 von unten nach oben bzw. von oben nach unten.

Im Falle der Umströmung von unten nach oben (Beispiel 3, Abb. 4.1) läuft nur der Ventilator V1 und die Regelventile R5, R8, R10, R11 und R12 sind geöffnet; die Regelventile R2, R4, R9, R13 und R14 hingegen geschlossen (vgl. Abb. 5).

Bei Bedarf können der Ventilator V2 zugeschaltet und die Regelventile R2 und R 13 geöffnet werden. Der zugeschaltete Ventilator V2 dient dann der Addition geförderter Luftmengen bei den verschiedenen Luftführungsvarianten. Die Stellung der Regelventile und Ventilatoren des Beispiels 4 in Abb. 4.1 ist ebenfalls in Abb. 5 dargestellt.

### Beispiel 5.) Überströmung und Unterströmung der Miete 10.

Bei der Überströmung und Unterströmung der Miete 10 (Beispiel 5, Abb. 4.1) arbeiten beide Ventilatoren V1 + V2 entweder parallel, oder V2 ist abgeschaltet. Wird nur mit dem Ventilator V1 gearbeitet, sind die Regelventile R2, R4, R8, R10, R11, R12 und R14 geöffnet und die Regelventile R5, R9 und R13 geschlossen. Bei dieser Strömungsvariante wird die Miete 10 beidseitig (oben und unten) dem gleichen Effekt ausgesetzt, wie bei der Variante gemäß Beispiel 6, Abb. 4.2, d.h. der reinen, nur einseitig wirkenden Überströmung.

### Beispiele 6.)/7.) Überströmung oder Unterströmung der Miete 10.

Zum Zwecke der Überströmung (Beispiel 6, Abb. 4.2) wird die Luft über die Miete 10 geführt. In diesem Fall läuft entweder Ventilator V1 oder V2. Läuft Ventilator V2, so sind die Regelventile R1 und R2 dabei geschlossen; die Regelventile R4, R12 und R14 hingegen geöffnet. Eine laminare Luftströmung führt sehr sanft Wärme und Abgase ab. Sie führt außerdem zu einem leichten Ansaugen der Gase aus der Miete 10 in die überströmende Luft. Die Stellung der Regelventile und Ventilatoren des Beispiels 7 in Abb. 4.1 sind in Abb. 5 angegeben.

### Beispiele 8.)/9.) Durchströmung von unten nach oben und Überströmung oder Durchströmung von oben nach unten und Unterströmung.

Um die Überströmung mit einer Durchströmung (Beispiel 8, Abb. 4.2) zu kombinieren, läuft der Ventilator V1 und die Regelventile R2, R4, R10, R11, R12 und R14 sind geöffnet (vgl. Abb. 5). Die Ventile R5, R8, R9 und R13 sind geschlossen. Die Vorteile dieser Strömungsvariante sind ausführlich in der DE 40 34 400 Al bzw. der hierzu korrespondierenden W092/07807 - **GRABBE** - beschrieben. Zur Vermeidung von Wiederholungen wird ausdrücklich auf den Inhalt des genannten Dokumentes verwiesen. Die Stellung der Regelventile und Ventilatoren des Beispiels 9 in Abb. 4.1 sind in Abb. 5 angegeben.

### Beispiele 10.)/11.) sind wie die Beispiele 8.)/9.), jedoch mit mindestens zwei Ventilatoren.

Auch hierzu wird auf Abb. 5 verwiesen.

### Beispiele 12.)/13.) Umströmung von unten nach oben und gleichzeitige Durchströmung von unten nach oben oder Umströmung von oben nach unten und gleichzeitige Durchströmung von oben nach unten.

Bei dieser Strömungsvariante erlaubt die Regelung der Ventile R8 und/oder R1 (s. Abb. 2.2) sowie der Ventile R12 und/oder R1 in Verbindung mit R14 den stufenlosen Wechsel von einer reinen Durchströmung zu einer Mischform zwischen Durch- und Umströmung. Weiterhin kann durch zusätzliche Regelung der Ventile R2, R10, und R4 stufenlos zwischen der Strömungsform des Beispiels 12 und 13 gewechselt werden. Dieser Strömungswechsel entspricht einer Strömungsumkehr (vgl. Abb. 5, Strömungsvariante 12 und 13).

### Beispiele 14.)/15.) wie die Beispiele 1.)/2.), jedoch mit mindestens zwei Ventilatoren

Durch Regelung der Ventilstellung und/oder durch Einbringen von Strömungshindernissen lassen sich bei allen Strömungsführungen die Anteile laminarer und/oder turbulenter Strömung einstellen und damit eine differenzierte und selektive Wirkung auf die Ober- und Unterflächen der Miete (10) hervorrufen.

## Patentansprüche

1. Verfahren zur Behandlung von Stoffen oder Stoffgemengen in einer Miete (10) unter Einsatz biologisch aktiver Komponenten, insbesondere Mikroorganismen, in einem geschlossenen Reaktor (RX1 bis RXN) mit mehreren Reaktorzonen, nämlich die Miete (10) selbst und an die Miete (10) angrenzende Reaktorgasräume, wobei zum Einstellen, Einhalten, Steuern oder Regeln der Milieuzustände, Milieuzustandsänderungen und/oder Prozessparameter in der Miete (10) Gasströmungs-Reguliermittel (V1 bis V3, R1 bis R17, RF16, LF, Llzu bis LNzu, L1ab bis LNab, K1 bis K13, 10 bis 13) eingesetzt werden, mittels derer stets zwischen einem Durch-, Über-, Unter- und/oder Umströmen der Miete (10) und einer Richtungsumkehr der vorgenannten Gasströmungen gewählt werden kann.

2. Verfahren nach Anspruch 1, bei welchem die Gasströme Luftströme sind.

3. Verfahren nach Anspruch 1 oder 2, bei welchem ein oder mehrere Gasströme stationär, quasi-stationär oder instationär geführt werden.

4. Verfahren nach einem der vorstehenden Ansprüche, bei welchem die Volumen-, Druck-, Temperatur- und/oder Geschwindigkeits-Verhältnisse der Gasströmungsarten stufenlos gesteuert oder geregelt werden.

5. Verfahren nach einem der vorstehenden Ansprüche, bei welchem die Strömungsrichtung wenigstens einer Gasströmung periodisch oder aperiodisch alternierend umgekehrt wird.

6. Verfahren nach einem der vorstehenden Ansprüche, bei welchem wenigstens eine Gasströmung laminar oder turbulent geführt wird.

7. Verfahren nach Anspruch 6, bei welchem zwischen einer laminaren und einer turbulenten Strömungsführung periodisch oder aperiodisch alternierend abgewechselt wird.

8. Verfahren nach Anspruch 6 oder 7, bei welchem die laminare Gasströmung durch Einbringen von Strömungshindernissen und/oder alternierenden Wechsel der Stellung von Regelventilen (R1, R2, R4, R5, R8, R9, R10, R12) in eine turbulente Gasströmung überführt wird.

9. Verfahren nach einem der Ansprüche 4 bis 8, bei welchem, zur stufenlosen Einstellung der Gasströme und der Verhältnisse der Gasströme zueinander als Regeleinrichtungen, insbesondere Regelventile (R1 bis R17) und/oder regelbare Ventilatoren (V1, V2, V3), ausgebildete Gasströmungs-Reguliermittel verwendet werden.

10. Verfahren nach Anspruch 8, bei welchem die Regeleinrichtungen prozeßabhängig manuell, programmgesteuert und/oder rechnergestützt angesteuert werden.

11. Verfahren nach einem der vorstehenden Ansprüche, bei welchem die Temperatur der Reaktorluft und/oder die der Miete (10) als Regelgröße ausgewählt und prozeßabhängig angesteuert werden.

12. Verfahren nach einem der vorstehenden Ansprüche, bei welchem Temperaturdifferenzen in der Miete (10) und/-oder die Zustandsgrößen der Gasströme und/oder der Abluft (Temperatur, Feuchte, O₂ - CO₂-Verhältnis, Gasdruck, Strömungsgeschwindigkeit und/oder Durchsatzvolumen) als Regelgrößen verwendet werden.

13. Verfahren nach einem der vorstehenden Ansprüche, bei welchem, die Gasströme als geschlossenes Umluftsystem mit oder ohne Frischlufteinspeisung geführt werden.

14. Verfahren nach einem der vorstehenden Ansprüche, bei welchem wenigstens ein Gasstrom konditioniert wird.

15. Verfahren nach einem der Ansprüche 13 und 14, bei welchem ein definiertes Verhältnis zwischen Umluft- und Frischluft durch einen zur Frischluftzufuhr korrespondierenden Umluftaustrag eingestellt wird.

16. Verfahren nach Anspruch 14 oder 15, bei welchem die Konditionierung des strömenden Gases durch Einstellen von Temperatur, Druck und Inhaltsstoffen, insbesondere des Gehaltes an Stickstoff, Sauerstoff, Kohlendioxid, Ammoniak und/oder Wasser erfolgt.

17. Verfahren nach einem der vorstehenden Ansprüche, bei welchem, die Miete (10) mit einer Umsetzvorrichtung mechanisch umgesetzt wird.

18. Vorrichtung zur Behandlung von Stoffen oder Stoffgemengen in einer Miete (10) unter Einsatz biologisch aktiver Komponenten, insbesondere Mikroorganismen, mit
a) einem geschlossenen Reaktor (RX1 bis RXN), welcher mehrere Reaktorzonen, nämlich der Miete (10) selbst und an die Miete angrenzende Reaktorgasräume, aufweist und
b) die Milieuzustände, Milieuzustandsänderungen und/oder Prozessparameter in der Miete (10) einstellenden, einhaltenden, steuerenden oder regelnden Gasströmungs-Reguliermittel (V1 bis V3, R1 bis R17, RF16, LF, Llzu bis LNzu, L1ab bis LNab, K1 bis K13, 10 bis 13), die derart ausgelegt sind, daß mit ihnen stets zwischen einem Durch-, Über-, Unter- und/oder Umströmen der Miete (10) sowie einer Richtungsumkehr der vorgenannten Gasströmungen gewählt werden kann.

19. Vorrichtung nach Anspruch 20, bei welchem die Gasströmungs-Reguliermittel zum Einstellen, Einhalten, Steuern oder Regeln von Luftströmen ausgelegt sind.

20. Vorrichtung nach Anspruch 18 oder 19, in welcher die Reguliermittel zur stationären, quasi-stationären und/oder instationären Führung der Gasströme im Reaktorbetrieb ausgelegt sind.

21. Vorrichtung nach einem der Ansprüche 18 bis 20, in welcher Gasströmungs-Reguliermittel zur stufenlosen Regulierung der Volumen-, Druck-, Temperatur- und/oder Geschwindigkeits-Verhältnisse der Gasströme ausgelegt sind.

22. Vorrichtung nach einem der Ansprüche 18 bis 21, in welcher die Gasströmungs-Reguliermittel zur periodisch oder aperiodisch alternierenden Richtungsumkehr der Gasströme ausgelegt sind.

23. Vorrichtung nach einem Ansprüche 18 bis 22, in welcher die Gasströmungs-Reguliermittel zur laminaren oder turbulenten Führung der Gasströme ausgelegt sind.

24. Vorrichtung nach Anspruch 23, in welcher die Reguliermittel zur periodisch oder aperiodisch alternierenden Wechsel zwischen einer laminaren und einer turbulenten Strömungsführung ausgelegt sind.

25. Vorrichtung nach einem der Ansprüche 23 oder 24, in welcher die Gasströmungs-Reguliermittel Regelventile (R1, R2, R4, R5, R8, R9, R10, R12) und/oder verschiebbare Strömungshindernisse aufweisen und für einen alternierenden Wechsel der Stellungen der Regelventile oder der Strömungshindernisse ausgelegt sind.

26. Vorrichtung nach einem der Ansprüche 21 bis 25, in welcher die Gasströmungs-Reguliermittel wenigstens einen stufenlos regulierbaren Ventilator (V1, V2, V3) und Regelventile (R1 bis R17) aufweisen.

27. Vorrichtung nach Anspruch 26, in welcher der Ventilator prozessabhängig manuell, programmgesteuert und/-oder rechnergestützt ansteuerbar ist.

28. Vorrichtung nach einem der Ansprüche 18 bis 27, in welcher die Gasströmung-Reguliermittel Meßeinrichtungen (T1 bis T10, Tab) zur Erfassung der Temperatur der Reaktorluft und/oder der Miete (10) aufweisen, insbesondere in Verbindung mit Sollwertgebern, Komparatoren und Reglern zur prozessabhängigen Steuerung bzw. Regelung der Temperatur der Reaktorluft und/oder der Miete (10).

29. Vorrichtung nach einem der Ansprüche 18 bis 28, in welcher die Gasströmungs-Reguliermittel Meßeinrichtungen zur Ermittlung der Temperaturdifferenzen in der Miete und/oder zur Bestimmung der Zustandsgrößen der Gasströme und/oder der Abluft (Temperatur, Feuchte, O₂/CO₂-Verhältnis, Gasdruck, Strömungsgeschwindigkeit und/oder Durchsatzvolumen) aufweisen, insbesondere in Verbindung mit Sollwertgebern, Komparatoren und Reglern zur Steuerung bzw. Regelung der Temperaturdifferenzen in der Miete (10) und/oder der Zustandsgrößen der Gasströme und/oder der Abluft.

30. Vorrichtung nach einem der Ansprüche 18 bis 29, in welcher die Gasströmungs-Reguliermittel zur Führung der Gasströmung als geschlossenes Umluftsystem mit oder ohne Frischlufteinspeisung ausgelegt sind.

31. Vorrichtung nach einem der Ansprüche 18 bis 30, mit einer Konditioniereinrichtung zur Konditionierung der Gasströme.

32. Vorrichtung nach Anspruch 34 oder 35, in welcher die Gasströmungs-Reguliermittel Ventile (R16, R17) zur definierten Einstellung des Verhältnisses zwischen Frischlufteintrag und Umluftaustrag aufweisen.

33. Vorrichtung nach Anspruch 31 oder 32, in welcher die Konditioniereinrichtung zur Konditionierung des strömenden Gases Mittel zur Einstellung von Temperatur, Druck und Inhaltsstoffen, insbesondere des Gehaltes an Stickstoff, Sauerstoff, Kohlendioxid, Ammoniak und Wasser aufweist.

34. Vorrichtung nach einem der Ansprüche 18 bis 33 mit einer Umsetzeinrichtung zur mechanischen Umsetzung der Miete (10).

35. Vorrichtung nach Anspruch 30 oder einem der auf Anspruch 30 rückbezogenen Ansprüche 31 bis 34 mit mehreren separaten Reaktoren (RX1, RX2, ... RXN), in welcher das Umluftsystem als geregelte zentrale Belüftungseinrichtung (11, 12, 13) ausgelegt ist und wenigstens einem oder mehreren, vorzugsweise allen Reaktoren zugeordnete Einrichtungen (Abb. 3.1, 3.2) zur Reaktor- unabhängigen und individuellen Einstellbarkeit der den mikrobiellen Stoffumsatz bestimmenden Prozeßparameter aufweist.

36. Vorrichtung nach Anspruch 35, in welcher die Reaktoren RX1 bis RXN wahlweise, insbesondere über Regelventile (R1zu...RNzu), mit der zentralen Belüftungseinrichtung (11, 12, 13) verbindbar sind.

37. Vorrichtung nach Anspruch 35 oder 36, in welcher die Reaktoren (RX1 bis RXN) jeweils mit einer eigenen regelbaren Frischlufteinspeisung (LF, RF16) ausgestattet sind.

38. Vorrichtung nach einem der Ansprüche 18 bis 37 in welcher der Reaktor (RX1 bis RXN) jeweils eine oberhalb und unterhalb an die Miete (10) angrenzende Reaktorzone aufweist, wobei die an die Miete (10) angrenzenden Reaktorzonen jeweils über Gasströmungsleitungen und darin angeordnete Regelventile (R1, R2, R4, R5, R8, R9, R10, R12) miteinander verbindbar sind.

39. Vorrichtung nach Anspruch 38, in welcher die Gasströmungsleitungen und Regelventile gruppenweise spiegelsymmetrisch zum Reaktor (RX1 bis RXN) angeordnet sind.

40. Vorrichtung nach Ansprüche 38 oder 39, in welcher die oberhalb und die unterhalb der Miete (10) liegenden Reaktorzonen zu beiden Seiten des Reaktors jeweils über eine, jeweils ein erstes Regelventil (R1, R2) aufweisende Gasströmungsleitung, miteinander verbunden sind.

41. Vorrichtung nach Anspruch 40, in welcher zu beiden Seiten der ersten Regelventile (R1 und R2) jeweils ein zweites Regelventil (R4, R8, R10, R12) in der Gasströmungsleitung angeordnet ist.

42. Vorrichtung nach Anspruch 41, in welcher mindestens ein Ventilator (V1, V2) über ein ihm nachgeschaltetes drittes Regelventil (R11, R13) mit einer zwischen dem ersten und dem zweiten Regelventil (R2, R4; R2, R10) liegenden Stelle der Gasströmungsleitung verbunden ist.

43. Vorrichtung nach Anspruch 42, in welcher die Gasströmungsleitung (K4), welche die den Ventilatoren (V1, V2) abgewandten Enden der oberhalb und unterhalb der Miete (10) liegenden Reaktorzonen miteinander verbindet, an einer zwischen ihren ersten und zweiten Regelventilen (R1, R8; R1, R12) liegenden Stelle eine Abzweigung für die Umluftleitung (K6) aufweist.

44. Vorrichtung nach einem der Ansprüche 38 bis 43, in welcher sich die Umluftleitung (K6) in zwei weitere Leitungen verzweigt, nämlich eine in die Einrichtung (11) zur Umluftkonditionierung mündende (K5) und eine in den Reaktor (RX1 bis RXN) mündende Leitung (K52).

45. Vorrichtung nach Anspruch 44, in welcher die in den Reaktor (RX1 bis RXN) mündende Leitung (K52) in zwei weitere, jeweils mit einem vierten Regelventil (R5, R9) ausgestattete Zweigleitungen (K10o, K10u) verzweigt ist, von denen die eine in die obere Reaktorzone und die andere in die untere Reaktorzone mündet.

46. Vorrichtung nach einem der Ansprüche 43 bis 45, in welcher die Umluftleitung (K6) mit einem fünften Regelventil (R14) bestückt ist.

## Claims

1. Process for the treatment of substances or substance mixtures in a silo (10) using biologically active components, in particular microorganisms, in a closed reactor (RX1 to RXN) with a plurality of reactor zones, namely the silo (10) itself and reactor gas spaces adjacent to the silo (10), gas flow regulating means (V1 to V3, R1 to R17, RF16, LF, Llzu to LNzu, L1ab to LNab, K1 to K13, 10 to 13) being used to set, maintain, control or adjust milieu conditions, changes in milieu conditions and/or process parameters in the silo (10), by means of which it is always possible to select a flow through, over, under and/or around the silo (10) and a reversal in the direction of the aforesaid gas flows.

2. Process according to claim 1, in which the gas streams are air streams.

3. Process according to claim 1 or claim 2, in which one or more gas streams are conducted in a steady-state, quasi-steady or unsteady manner.

4. Process according to one of the preceding claims, in which the volume, pressure, temperature and/or speed ratios of the gas flow types are continuously controlled or adjusted.

5. Process according to one of the preceding claims, in which the flow direction of at least one gas flow is reversed in a periodically or aperiodically alternating manner.

6. Process according to one of the preceding claims, in which at least one gas flow is conducted in a laminar or turbulent manner.

7. Process according to claim 6, in which there is periodic or aperiodic alternation between laminar and turbulent flow control.

8. Process according to claim 6 or claim 7, in which the laminar gas flow is converted into a turbulent gas flow by the introduction of flow restrictors and/or by aiternation of the position of control valves (R1, R2, R4, R5, R8, R9, R10, R12).

9. Process according to one of claims 4 to 8, in which gas flow regulating means in the form of control means, in particular control valves (R1 to R17) and/or controllable ventilators (V1, V2, V3) are used for the continuous adjustment of the gas streams and the ratios of the gas streams relative to one another.

10. Process according to claim 8, in which the control means are controlled manually in a process-bound manner, in a program-controlled manner and/or in a computer-aided manner.

11. Process according to one of the preceding claims, in which the temperature of the reactor air and/or the silo (10) is selected as a controlled variable and is controlled in a process-bound manner.

12. Process according to one of the preceding claims, in which temperature differences in the silo (10) and/or the state variables of the gas streams and/or the waste air (temperature, moisture content, O₂-CO₂ ratio, gas pressure, flow rate and/or throughput) are used as controlled variables.

13. Process according to one of the preceding claims, in which the gas streams are conducted in the form of a closed air circulation system with or without a supply of fresh air.

14. Process according to one of the preceding claims, in which at least one gas stream is conditioned.

15. Process according to one of claims 13 and 14, in which a defined ratio is set between circulating air and fresh air by means of the discharge of a quantity of circulating air corresponding to the quantity of fresh air supplied.

16. Process according to claim 14 or claim 15, in which the flowing gas is conditioned by adjusting temperature, pressure and ingredients, in particular the nitrogen, oxygen, carbon dioxide, ammonia and/or water content.

17. Process according to one of the preceding claims, in which the silo (10) is converted mechanically by means of a conversion device.

18. Device for the treatment of substances or substance mixtures in a silo (10) using biologically active components, in particular microorganisms, comprising
a) a closed reactor (RX1 to RXN) having a plurality of reactor zones, namely the silo (10) itself and reactor gas spaces adjacent to the silo, and
b) gas flow regulating means (V1 to V3, R1 to R17, RF16, LF, Llzu to LNzu, L1ab to LNab, K1 to K13, 10 to 13) setting, maintaining, controlling or adjusting milieu conditions, changes in milieu conditions and/or process parameters in the silo (10), designed in such a manner that it is always possible thereby to select a flow through, over, under and/or around the silo (10) and a reversal in the direction of the aforesaid gas flows.

19. Device according to claim 20, in which the gas flow regulating means are designed to set, maintain, control or adjust air streams.

20. Device according to claim 18 or claim 19, in which the regulating means are designed to conduct the gas streams in a steady-state, quasi-steady and/or unsteady manner during operation of the reactor.

21. Device according to one of claims 18 to 20, in which gas flow regulating means are designed for the continuous regulation of the volume, pressure, temperature and/or speed ratios of the gas streams.

22. Device according to one of claims 18 to 21, in which the gas flow regulating means are designed for the periodically or aperiodically alternating reversal of the direction of the gas streams.

23. Device according to one of claims 18 to 22, in which the gas flow regulating means are designed to conduct the gas streams in a laminar or turbulent manner.

24. Device according to claim 23, in which the regulating means are designed for the periodic or aperiodic alternation between laminar and turbulent flow control.

25. Device according to one of claims 23 or 24, in which the gas flow regulating means have control valves (R1, R2, R4, R5, R8, R9, R10, R12) and/or displaceable flow restrictors and are designed for alternation of the positions of the control valves or of the flow restrictors.

26. Device according to one of claims 21 to 25, in which the gas flow regulating means have at least one continuously adjustable ventilator (V1, V2, V3) and control valves (R1 to R17).

27. Device according to claim 26, in which the ventilator can be controlled manually in a process-bound manner, in a program-controlled manner and/or in a computer-aided manner.

28. Device according to one of claims 18 to 27, in which the gas flow regulating means have measuring means (T1 to T10, Tab) for detecting the temperature of the reactor air and/or the silo (10), in particular in association with setpoint generators, comparators and controllers for the process-bound control or adjustment of the temperature of the reactor air and/or the silo (10).

29. Device according to one of claims 18 to 28, in which the gas flow regulating means have measuring means for determining the temperature differences in the silo and/or for determining the state variables of the gas streams and/or the waste air (temperature, moisture content, O₂-CO₂ ratio, gas pressure, flow rate and/or throughput), in particular in association with setpoint generators, comparators and controllers for controlling or adjusting the temperature differences in the silo (10) and/or the state variables of the -gas streams and/or the waste air.

30. Device according to one of claims 18 to 29, in which the gas flow regulating means are designed to conduct the gas flow in the form of a closed air circulation system with or without a supply of fresh air.

31. Device according to one of claims 18 to 30, comprising a conditioning means for conditioning the gas streams.

32. Device according to claim 34 or claim 35, in which the gas flow regulating means have valves (R16, R17) for defined setting of the ratio between the intake of fresh air and the discharge of circulating air.

33. Device according to claim 31 or claim 32, in which the conditioning means for conditioning the flowing gas has means for adjusting temperature, pressure and ingredients, in particular the nitrogen, oxygen, carbon dioxide, ammonia and water content.

34. Device according to one of claims 18 to 33, comprising a conversion device for the mechanical conversion of the silo (10).

35. Device according to claim 30 or one of claims 31 to 34 relating back to claim 30, comprising a plurality of separate reactors (RX1, RX2, ... RXN) in which the air circulation system is designed as a controlled central ventilating means (11, 12, 13) and has means (Figures 3.1, 3.2) associated with at least one or more, preferably all of the reactors for the reactor-independent and individual adjustability of the process parameters determining the microbial substance conversion.

36. Device according to claim 35, in which the reactors RX1 to RXN can be connected as required, in particular via control valves (R1zu ... RNzu), to the central ventilating means (11, 12, 13).

37. Device according to claim 35 or 36, in which the reactors (RX1 to RXN) are each provided with their own controllable fresh air supply (LF, RF16).

38. Device according to one of claims 18 to 37, in which the reactor (RX1 to RXN) has respective adjacent reactor zones above and below the silo (10), wherein the reactor zones adjacent to the silo (10) can each be connected together by means of gas flow lines and control valves (R1, R2, R4, R5, R8, R9, R10, R12) arranged therein.

39. Device according to claim 38, in which the gas flow lines and control valves are arranged in groups in mirror symmetry relative to the reactor (RX1 to RXN).

40. Device according to claim 38 or claim 39, in which the reactor zones situated above and below the silo (10) are each connected together on either side of the reactor by means of respective gas flow lines each having a first control valve (R1, R2).

41. Device according to claim 40, in which respective second control valves (R4, R8, R10, R12) are arranged in the gas flow line on either side of the first control valves (R1 and R2).

42. Device according to claim 41, in which at least one ventilator (V1, V2) is connected by means of a third control valve (R11, R13) downstream thereof to a point of the gas flow line situated between the first and the second control valve (R2, R4; R2, R10).

43. Device according to claim 42, in which the gas flow line (K4) which connects together the ends of the reactor zones situated above and below the silo (10) remote from the ventilators (V1, V2) is provided at a point situated between its first and second control valves (R1, R8; R1, R12) with a branch for the air circulation line (K6).

44. Device according to one of claims 38 to 43, in which the air circulation line (K6) branches into two further lines, namely a line (K5) opening into the means (11) for conditioning the circulating air and a line (K52) opening into the reactor (RX1 to RXN).

45. Device according to claim 44, in which the line (K52) opening into the reactor (RX1 to RXN) branches into two further branch lines (K10o, K1ou) each provided with a fourth control valve (R5, R9), one of which opens into the upper reactor zone and the other into the lower reactor zone.

46. Device according to one of claims 43 to 45, in which the air circulation line (K6) is provided with a fifth control valve (R14).

## Revendications

1. Procédé pour traiter des matières ou des mélanges de matières dans une meule (10) en utilisant des composants biologiquement actifs, en particulier des micro-organismes, dans un réacteur fermé (RX1 à RXN) avec plusieurs zones de réacteur, à savoir la meule (10) elle-même et des chambres de gaz de réacteur adjacentes à celle-ci, où, pour établir, maintenir, diriger ou réguler les états du milieu, les modifications des états du milieu et/ou les paramètres de procédé dans la meule (10), on utilise des moyens pour réguler les écoulements gazeux (V1 à V3, R1 à R17, RF16, LF, L1zu à LNzu, L1ab LNab, K1 à K13, 10 à 13), grâce auxquels on peut constamment choisir entre un écoulement à travers, au-dessus, au-dessous et/ou autour de la meule (10) et une inversion du sens des écoulements gazeux précités.

2. Procédé selon la revendication 1, dans lequel les écoulements gazeux sont des écoulements d'air.

3. Procédé selon la revendication 1 ou 2, dans lequel un ou plusieurs écoulements gazeux sont effectués comme écoulements stationnaires, quasi-stationnaires ou non stationnaires.

4. Procédé selon l'une des revendications précédentes, dans lequel les conditions de volume, de pression, de température et/ou de vitesse des types d'écoulement gazeux peuvent être dirigées ou contrôlées de façon continue.

5. Procédé selon l'une des revendications précédentes, dans lequel le sens d'écoulement d'au moins un écoulement gazeux est inversé de façon alternée, périodique ou apériodique.

6. Procédé selon l'une des revendications précédentes, dans lequel au moins un écoulement gazeux est effectué de façon laminaire ou turbulente.

7. Procédé selon la revendication 6, dans lequel on passe alternativement, de façon périodique ou apériodique, d'un écoulement laminaire à un écoulement turbulent.

8. Procédé selon la revendication 6 ou 7, dans lequel l'écoulement laminaire de gaz est obtenu par l'introduction d'obstacles à l'écoulement et/ou par changement alternatif de la position des vannes de régulation (R1, R2, R4, R5, R8, R9, R10, R12) dans un écoulement turbulent de gaz.

9. Procédé selon l'une des revendications 4 à 8,dans lequel, pour obtenir un établissement continu des écoulements gazeux et des conditions des écoulements gazeux les uns par rapport aux autres, on utilise comme dispositifs de régulation, des moyens de régulation d'écoulement gazeux, formé en particulier de vannes de régulation (R1 à R17) et/ou de ventilateurs réglables (V1, V2, V3).

10. Procédé selon la revendication 8, dans lequel les moyens de régulation sont commandés, en fonction du procédé, manuellement, par programmation et/ou avec l'assistance d'un ordinateur.

11. Procédé selon l'une des revendications précédentes, dans lequel la température de l'air du réacteur et/ou la température de la meule (10) sont choisies comme valeurs de régulation et sont commandées en fonction du procédé.

12. Procédé selon l'une des revendications précédentes, dans lequel les différences de température dans la meule (10) et/ou les valeurs d'état des écoulements gazeux et/ou de l'air évacué (température, humidité, rapport O₂-CO₂, pression gazeuse, vitesse d'écoulement et/ou débit volumétrique) sont utilisées comme valeurs de régulation.

13. Procédé selon l'une des revendications précédentes, dans lequel les écoulements gazeux sont réalisés comme système fermé de circulation d'air avec ou sans introduction d'air frais.

14. Procédé selon l'une des revendications précédentes, dans lequel au moins un écoulement gazeux est conditionné.

15. Procédé selon l'une des revendications 13 et 14, dans lequel on fixe un rapport défini entre l'air de circulation et l'air frais par une évacuation d'air en circulation qui correspond à l'introduction d'air frais.

16. Procédé selon la revendication 14 ou 15, dans lequel le conditionnement du gaz en écoulement est réalisé en fixant la température, la pression et les matières contenues, en particulier la teneur en azote, en oxygène, en gaz carbonique, en ammoniac et/ou en eau.

17. Procédé selon l'une des revendications précédentes, dans lequel la meule (10) est transformée avec un dispositif mécanique de transformation.

18. Dispositif pour traiter des matières ou des mélanges de matières dans une meule (10) en utilisant des composants biologiquement actifs, en particulier des micro-organismes, avec
a) un réacteur fermé (RX1 à RXN) qui comporte plusieurs zones de réacteur, à savoir la meule (10) elle-même et des chambres de gaz de réacteur adjacentes à la meule, et
b) des moyens pour réguler l'écoulement gazeux (V1 à V3, R1 à R17, RF16, LF, L1zu à LNzu, L1ab à LNab, K1 à K13, 10 à 13) pour établir, maintenir, diriger ou réguler les états du milieu, les modifications des états du milieu et/ou les paramètres de procédé dans la meule (10), qui sont disposés de telle sorte qu'avec eux on peut constamment choisir entre un écoulement à travers, au-dessus, au-dessous et/ou autour de la meule (10) ainsi qu'une inversion du sens des écoulements gazeux précités.

19. Dispositif selon la revendication 20, dans lequel les moyens de régulation de l'écoulement gazeux sont disposés pour établir, maintenir, diriger ou réguler des écoulements d'air.

20. Dispositif selon la revendication 18 ou 19, dans lequel les moyens de régulation sont disposés pour conduire les écoulements gazeux, lors du fonctionnement du réacteur, de façon stationnaire, quasi-stationnaire ou non stationnaire.

21. Dispositif selon une des revendications 18 à 20, dans lequel les moyens de régulation de l'écoulement gazeux sont disposés pour réguler en continu les conditions de volume, de pression, de température et/ou de vitesse des écoulements gazeux.

22. Dispositif selon une des revendications 18 à 21, dans lequel les moyens de régulation des écoulements gazeux sont disposés pour que le sens d'écoulement des écoulements gazeux soit inversé, de façon périodique ou apériodique.

23. Dispositif selon une des revendications 18 à 22, dans lequel les moyens de régulation des écoulements gazeux sont disposés pour obtenir un écoulement laminaire ou turbulent des écoulements gazeux.

24. Dispositif selon la revendication 23, dans lequel les moyens de régulation sont disposés pour un changement alterné périodique ou apériodique entre la conduite d'un écoulement laminaire et la conduite d'un écoulement turbulent.

25. Dispositif selon une des revendications 23 ou 24, dans lequel les moyens de régulation des écoulements de gaz comportent des vannes de régulation (R1, R2, R4, R5, R8, R9, R10, R12) et/ou des obstacles amovibles à l'écoulement et sont disposés pour un changement alternatif des positions des vannes de régulation ou des obstacles à l'écoulement.

26. Dispositif selon une des revendications 21 à 25, dans lequel les moyens de régulation d'écoulements gazeux comportent au moins un ventilateur (V1, V2, V3) réglable de façon continue et des vannes de régulation (R1 à R17).

27. Dispositif selon la revendication 26, dans lequel le ventilateur peut être commandé, en fonction du procédé, manuellement, par programmation et/ou avec l'assistance d'un ordinateur.

28. Dispositif selon une des revendications 18 à 27, dans lequel les moyens de régulation des écoulements gazeux présentent des dispositifs de mesure (T1 à T10 Tab) pour prendre la température de l'air du réacteur et/ou de la meule (10), en particulier en relation avec des données de consigne, des comparateurs et des dispositifs régulateurs pour diriger ou réguler en fonction du procédé la température de l'air du réacteur et/ou de la meule (10).

29. Dispositif selon une des revendications 18 à 28, dans lequel les moyens de régulation des écoulements gazeux comportent des dispositifs de mesures pour déterminer les différences de température dans la meule et/ou pour déterminer les valeurs d'état des écoulements gazeux et/ou de l'air évacué (température, humidité, rapport O₂-CO₂, pression gazeuse, vitesse d'écoulement et/ou débit volumétrique), en particulier en liaison avec des donneurs de valeurs de consigne, des comparateurs et des dispositifs de réglage ou de régulation des différences de température dans la meule (10) et/ou des valeurs d'état des écoulements gazeux et/ou de l'air évacué.

30. Dispositif selon une des revendications 18 à 29, dans lequel les moyens de régulation des écoulements gazeux sont disposés de façon à conduire l'écoulement gazeux comme un système fermé de circulation d'air avec ou sans introduction d'air frais.

31. Dispositif selon une des revendications 18 à 30, avec un dispositif de conditionnement pour conditionner les écoulements gazeux.

32. Dispositif selon la revendication 34 ou 35, dans lequel les moyens de régulation des écoulements gazeux comportent des vannes (R16, R17) pour fixer de façon définie les rapports entre l'entraînement d'air frais et le débit d'air en circulation.

33. Dispositif selon la revendication 31 ou 32, dans lequel le dispositif de conditionnement pour conditionner le gaz en écoulement comporte des moyens pour fixer la température, la pression et les matières contenues, en particulier la teneur en azote, en oxygène, en gaz carbonique, en ammoniac et en eau.

34. Dispositif selon une des revendications 18 à 33, avec un dispositif de transformation pour la transformation mécanique de la meule (10).

35. Dispositif selon la revendication 30 ou une des revendications 31 à 34 dépendant de la revendication 30, avec plusieurs réacteurs séparés (RX1, RX2,...RXN), dans lequel le système de circulation d'air est disposé comme dispositif central régulé d'aération (11, 12, 13) et comporte des dispositifs attribués à au moins un ou plusieurs, de préférence tous les, réacteurs (figure 3.1, 3.2) pour fixer , indépendamment du réacteur, et de façon individuelle, les paramètres de procédé qui déterminent la transformation microbienne de matière.

36. Dispositif selon la revendication 35, dans lequel les réacteurs RX1 à RXN peuvent, au choix, en particulier par des vannes de régulation (R1zu...RNzu), être reliés au dispositif central d'aération (11, 12, 13).

37. Dispositif selon la revendication 35 ou 36, dans lequel les réacteurs (RX1 à RXN) sont munis chaque fois d'une alimentation propre régulable d'air frais (LF, RF16).

38. Dispositif selon une des revendications 18 à 37, dans lequel le réacteur (RX1 à RXN) présente chaque fois une zone de réacteur au-dessus et au-dessous, adjacentes à la meule (10), de telle sorte que les zones de réacteur adjacentes à la meule (10) peuvent chaque fois être reliées entre elles par des canalisations d'écoulement gazeux et des vannes qui y sont disposées (R1, R2, R4, R5, R8, R9, R10, R12).

39. Dispositif selon la revendication 38, dans lequel les canalisations d'écoulement gazeux et les vannes de régulation sont disposées par groupes avec une symétrie de miroir par rapport au réacteur (RX1 à RXN).

40. Dispositif selon les revendications 38 ou 39, dans lequel les zones de réacteur qui se trouvent au-dessus et au-dessous de la meule (10) des deux côtés du réacteur sont reliées ensemble chaque fois par une canalisation d'écoulement gazeux qui présente chaque fois une première vanne (R1, R2).

41. Dispositif selon la revendication 40, dans lequel aux deux côtés de la première vanne de régulation (R1 et R2) est disposée chaque fois une deuxième vanne de régulation (R4, R8, R10, R12) dans la canalisation d'écoulement gazeux.

42. Dispositif selon la revendication 41, dans lequel au moins un ventilateur (V1, V2) est relié, par une troisième vanne de régulation (R11, R13) qui est intercalée en arrière de lui, à une position de la canalisation de l'écoulement gazeux, cette position étant disposée entre la première et la deuxième vanne de régulation (R2, R4 ; R2, R10).

43. Dispositif selon la revendication 42, dans lequel la canalisation d'écoulement gazeux (K4) qui relie entre elles les extrémités, éloignées des ventilateurs (V1, V2), des zones de réacteur qui se trouvent au-dessus et au-dessous de la meule (10), présente une ramification, à une position qui se trouve entre sa première et sa deuxième vanne de régulation (R1, R8 ; R1, R12), pour la conduite de circulation d'air (K6).

44. Dispositif selon une des revendications 38 à 43, dans lequel la canalisation de circulation d'air (K6) se ramifie en deux autres canalisations, à savoir une canalisation (K5) qui débouche dans le dispositif (11) pour le conditionnement d'air et une canalisation (K52) qui débouche dans le réacteur (RX1 à RXN).

45. Dispositif selon la revendication 44, dans lequel la canalisation (K52) qui débouche dans le réacteur (RX1 à RXN) se ramifie en deux autres canalisations de ramification (K10o, K10u) équipées chaque fois d'une quatrième vanne de régulation (R5, R9), dont une débouche dans la zone supérieure du réacteur et l'autre dans la zone inférieure du réacteur.

46. Dispositif selon une des revendications 43 à 45, dans lequel la canalisation de circulation d'air (K6) est équipée d'une cinquième vanne de régulation (R14).
